# EUROPEAN PATENT APPLICATION

(11) **EP 2 767 523 A1**
(43) Date of publication of application: **20.08.2014**
(21) Application number: 14168621.2
(22) Date of filing: 10.08.2011
(51) Int. Cl.: C04B 28/08, C04B 32/02, C04B 111/26

(54) **Seawater-mixed concrete, concrete structure constructed with the same, and design method of concrete structure constructed with seawater-mixed concrete**

(30) Priority: 17.12.2010 JP 2010281907; 17.12.2010 JP 2010281908
(62) Divisional of application: 11177063.2
(71) Applicant: Obayashi Corporation, Tokyo 108-8502 (JP)
(72) Inventor: AOKI, Shigeru, Minato-ku, Tokyo 108-8502 (JP); KANAI, Makoto, Minato-ku, Tokyo 108-8502 (JP); TAKEDA, Nobufumi, Kiyose-shi, Tokyo 204-8558 (JP); ISHIZEKI, Yoshikazu, Kiyose-shi, Tokyo 204-8558 (JP)
(74) Representative: Charlton, Peter John

(57) **Abstract**

The present invention relates to concrete with necessary durability using seawater and sea sand. The seawater mixed concrete of the present invention is obtained by mixing a mixture including slag-containing cement and sea sand, with seawater. And by including a nitrite-based admixture and pozzolan, the diffusion coefficient of concrete after hardening can be reduced to restrain the external intrusion of harmful factors. Further, the concrete structure according to the present invention can include seawater mixed concrete and reinforcement for increasing tensile strength.

## Description

The present invention relates to seawater-mixed concrete that has used sea sand as aggregate and seawater as mixing water, concrete structures constructed with seawater-mixed concrete, and a design method of concrete structures that selects a type of concrete structure according to its life period.

### [Background Art]

Concrete that has used seawater as mixing water during its production is well known. For example, PTL1 discloses seawater mixed concrete made by mixing alumina cement, fine aggregate and coarse aggregate with seawater.

In general however, there are various limits imposed when seawater or sea sand is used at the time of producing concrete. Regarding use of seawater, for example, the Standard Specification for Concrete Structures [Construction] (2007 Version) by the Japan Society of Civil Engineers, states that "generally, seawater is not to be used as mixing water." There is also provided that "in the case of plain concrete where additional bars are not used, seawater may be used provided that it is confirmed that there is no effect on the quality of concrete. " Meanwhile, the above-mentioned specification provides in regard to sea sand that the amount of chloride ions is to be "0.04% or less with respect to absolute dry weight of fine sand, NaCl equivalent, upon removal of salt." Further, since chloride ions are supplied from cement and admixtures besides the above mentioned seawater and sea sand, the specification provides that "the amount of the entire chloride ion provided during mixing is to be, in principle, 0.3 kg/m³ or less."

Here, in the case seawater is used as mixing water, the amount of chlorine ions in concrete would be approximately 3.5 kg/m³. Since the chlorine ion concentration of sea sand is 0.3%, NaCl equivalent, the amount of chlorine ions from sea sand, in concrete, would be approximately 1.5 kg/m³. Taking into consideration the aforementioned provision, this means that, besides plain concrete, seawater and sea sand cannot be used for concrete as it is.

See Japanese Patent Application Laid-open Publication No. 2005-281112 ("PTL 1").

Regardless of country, at remote islands or costal areas there are cases where seawater would have to be used as mixing water and sea sand as fine aggregate and at the same time secure durability equivalent to that of reinforced concrete structures. So, as long as the above-mentioned provision is to be complied, there is no choice but to desalinate seawater when only seawater can be procured for mixing water. The degree of desalination shall be so that the constituent conforms to tap water, or conforms to the water-quality standard specified by the Japan Society of Civil Engineers (JSCE-B101) or the Japan Industrial Standard (JIS) (JIS A 5308 Appendix 3). In this case, however, there is required a desalination plant meaning that procurement of equipment and transportation costs would be essential and further requiring power for operating the desalination plant, being a cause for emitting a large amount of carbon dioxide. Therefore, it would be difficult to make lavish use of freshwater.

Even if the circumstances allowed transportation of freshwater, expenses will be incurred, and in addition, for both ground and marine transportation transporting freshwater would be the cause of carbon dioxide emission. Therefore, this would greatly affect the environment at remote islands or costal areas where preservation of the environment is a condition that needs to be satisfied. Accordingly, even in such a case, lavish use of freshwater is difficult.

Salt removal is required when sea sand is used. So, the above-mentioned problem arises when freshwater is used for salt removal. The use of rainwater is an option, however, regions where rainwater can be used are basically those where freshwater can be easily obtained, thus they need not bother to use sea water. By the way, it would take a considerable amount of time for storing rainwater of an amount required for salt removal in dry regions. Thus the use of rainwater is not realistic.

As mentioned above, there is a desire for constructing concrete structures using seawater and sea sand at regions such as remote islands and coastal areas in particular, where freshwater cannot be used lavishly. Since the standard under the above-mentioned specification is considered to have been formulated with durability of concrete structures as criterion, it is presumed that this standard need not necessarily be conformed with as long as the required durability can be assured.

Further, in general, concrete structures have durability that suits its use, and the cost of material and the like are likely to rise when attempting to secure long-term durability. Therefore, concrete structures requiring short term durability need not be given excessive long-term durability but is desired to be provided a structure appropriate for its use.

The present invention has been made in view of the above circumstances and it is an object thereof to achieve seawater mixed concrete with required durability using seawater and sea sand. A further object of the present invention is to use the seawater mixed concrete to construct concrete structures that are provided with required durability. Another further object of the present invention is to realize a design method for concrete structures provided with durability appropriate for their use.

### [Solution to Problem]

The inventors have presumed that the problem to constructing reinforced concrete structures with seawater mixed concrete using sea sand as fine aggregate and seawater as mixing water, is the sodium ions and chloride ions originating from sodium chloride included in seawater and sea sand. The present invention has been achieved based on the knowledge that the alkali-aggregate reaction caused by sodium ions can be restrained by using slag-containing cement as the cement constituent.

Additionally, it was presumed that the decline in durability associated with the corrosion of reinforcement caused by chloride ions would have a large effect on the life of concrete structures. And the present invention has been achieved based on the knowledge that the life of concrete structures can be adjusted by selecting reinforcement having different durability in relation to chloride ions.

To be specific, the seawater mixed concrete of the present invention is characterized to be obtained by mixing seawater with a mixture of slag-containing cement and sea sand.

According to the seawater mixed concrete of the present invention, the compressive strength of concrete after hardening up to 28-day material age can be increased compared to concrete using tap water, owing to the use of sea sand as fine aggregate and seawater as mixing water. And since slag-containing cement restrains alkali-aggregate reaction, expansion of concrete can be controlled even if there exists a large amount of sodium ions originating from sodium chloride included in seawater and sea sand. For such reason, concrete with required durability can be obtained even when seawater and sea sand is used.

With the seawater mixed concrete according to the present invention, the compressive strength of concrete after hardening can be increased when nitrite-type admixtures are used in addition to slag-containing cement. Additionally, the diffusion coefficient of concrete after hardening can be reduced and thus external intrusion of harmful factors can be restrained. For example, seawater and sea breeze borne salinity or carbon dioxide can be restrained from intruding into concrete.

When the sweater mixed concrete according to the present invention includes pozzolan, the diffusion coefficient of concrete after hardening can be reduced as well as the external intrusion of harmful factors restrained. For example, seawater and sea breeze borne salinity or carbon dioxide can be restrained from intruding into concrete.

Further, when a concrete structure is constructed by placing the aforementioned seawater mixed concrete into forms and removing the forms after hardening of concrete, allows earlier removal of the forms compared with typical concrete using fine aggregate sand free from salinity, and tap water as mixing water. As a result, the construction period can be shortened.

Furthermore, concrete structures according to the present invention is characterized to include seawater mixed concrete obtained by mixing a mixture of slag-containing cement and sea sand with seawater, and reinforcement for increasing tensile strength.

According to concrete structures of the present invention, the compressive strength of concrete up to 28-day material age can be increased compared to that using tap water, owing to the use of sea sand as fine aggregate and sea water as mixing water. And since slag-containing cement restrains alkali-aggregate reaction, concrete expansion can be controlled even when there exists a large amount of sodium ions originating from sodium chloride included in seawater and sea sand. Further, necessary tensile strength can be secured with the use of reinforcement. In this way, concrete structures provided with required durability can be constructed even when seawater and sea sand is used.

With concrete structures of the present invention, when seawater mixed concrete includes a nitrite-based admixture, chloride ions react therewith or are adsorbed thereby thus defects such as corrosion and the like by chloride ions can be restrained. In addition, the diffusion coefficient of concrete after hardening can be reduced and external intrusion of harmful factors can be restrained. For example, seawater and sea breeze borne salinity or carbon dioxide can be restrained from intruding into concrete.

With concrete structures of the present invention, when seawater mixed concrete includes pozzolan, the diffusion coefficient of concrete after hardening can be reduced as well as external intrusion of harmful factors restrained. For example, seawater and sea breeze borne salinity or carbon dioxide can be restrained from intruding into concrete.

With concrete structures of the present invention, when reinforcement is formed with carbon fiber, concrete structures capable of being used for a long period of about 100 years can be constructed since the reinforcement is not corroded by chloride ions.

With concrete structures of the present invention, when reinforcement is formed with epoxy coated steel bars being ordinary steel bars with their surfaces coated with epoxy resin, concrete structures capable of being used for a medium period of about 70 years can be constructed since the ordinary steel bars can be protected from corrosion due to chloride ions by epoxy resin coating.

With concrete structures of the present invention, when reinforcement is formed with rust proof coated steel bars being ordinary steel bars with their surfaces coated with anti-rust, concrete structures capable of being used for a short period of about 30 years can be constructed since the ordinary steel bars can be protected from corrosion due to chloride ions by anti-rust coating.

Further the present invention is a design method of selecting a concrete structure of a type according to its life period, wherein a first concrete structure including reinforcement made with carbon fiber and seawater mixed concrete, the seawater mixed concrete obtained by mixing a mixture of blast furnace cement and sea sand, with seawater, is selected when the life period of the concrete structure is a long term; a second concrete structure including the aforementioned seawater mixed concrete and reinforcement made with epoxy coated steel bars being ordinary steel bars with their surfaces coated with epoxy resin, is selected when the life period of the concrete structure is a medium term being shorter than the aforementioned long term; and a third concrete structure including the aforementioned seawater mixed concrete and reinforcement made with rust proof coated steel bars being ordinary steel bars with their surfaces coated with anti-rust, is selected when the life period of the concrete structure is a short term being shorter than the aforementioned medium term.

According to the present invention, concrete structures having life periods appropriate for its use can be designed by reason of selecting, according to their life period, reinforcement made with carbon fiber, reinforcement made with epoxy coated steel bars, or reinforcement made with rust proof coated steel bars, to be combined with seawater mixed concrete.

### [Advantageous Effects of Invention]

According to the present invention, concrete provided with necessary durability can be obtained even when seawater and sea sand is used. Further, concrete structures provided with necessary durability can be constructed even when seawater and sea sand is used. Furthermore, a design method of concrete structures provided with necessary durability adapted to their use can be realized.

In the drawings:
Fig. 1 is a diagram in a table form explaining the materials used for each test.
Fig. 2 is a diagram in a table form showing each sample and compressive strength in the compressive strength test.
Fig. 3 is a bar chart showing the compressive strength of each sample.
Fig. 4A is a diagram showing the compressive strength of seawater mixed concrete.
Fig. 4B is a diagram showing the compressive strength of seawater mixed concrete.
Fig. 5A is a diagram comparing seawater mixed concrete and ordinary concrete.
Fig. 5B is a diagram comparing seawater mixed concrete and ordinary concrete.
Fig. 5C is a diagram comparing seawater mixed concrete and ordinary concrete.
Fig. 6 is a diagram explaining each sample used in the durability test.
Fig. 7 is a diagram showing the mix of each sample and the number of specimen taken.
Fig. 8A is a diagram explaining the corroded condition of sample 1 after performing a single cycle acceleration test.
Fig. 8B is a diagram explaining the corroded condition of sample 1 after performing a single cycle acceleration test.
Fig. 8C is a diagram explaining the corroded condition of sample 1 after performing a single cycle acceleration test.
Fig. 8D is a diagram explaining the corroded condition of sample 1 after performing a single cycle acceleration test.
Fig. 9A is a diagram explaining the corroded condition of sample 1 after performing a five cycle acceleration test.
Fig. 9B is a diagram explaining the corroded condition of sample 1 after performing a five cycle acceleration test.
Fig. 9C is a diagram explaining the corroded condition of sample 1 after performing a five cycle acceleration test.
Fig. 9D is a diagram explaining the corroded condition of sample 1 after performing a five cycle acceleration test.
Fig. 10 is a diagram explaining the corroded conditions of samples 1 through 3 after performing a 10 cycle acceleration test.
Fig. 11 is a diagram explaining the corroded conditions of samples 4 through 6 after performing a 10 cycle acceleration test.
Fig. 12 is a diagram explaining the corroded conditions of samples 7 through 9 after performing a 10 cycle acceleration test.
Fig. 13 is a diagram explaining the corroded conditions of samples 10 and 11 after performing a 10 cycle acceleration test.
Fig. 14 is a diagram explaining the corroded conditions of samples 1 through 3 after performing a 20 cycle acceleration test.
Fig. 15 is a diagram explaining the corroded conditions of samples 4 through 6 after performing a 20 cycle acceleration test.
Fig. 16 is a diagram explaining the corroded conditions of samples 7 through 9 after performing a 20 cycle acceleration test.
Fig. 17 is a diagram explaining the corroded conditions of samples 10 and 11 after performing a 20 cycle acceleration test.
Fig. 18 is a diagram explaining the corroded conditions of samples 1 through 3 after performing a 33 cycle acceleration test.
Fig. 19 is a diagram explaining the corroded conditions of samples 4 through 6 after performing a 33 cycle acceleration test.
Fig. 20 is a diagram explaining the corroded conditions of samples 7 through 9 after performing a 33 cycle acceleration test.
Fig. 21 is a diagram explaining the corroded conditions of samples 10 and 11 after performing a 33 cycle acceleration test.
Fig. 22 is a chart explaining the change of chloride ions in the steel bars of sample 2 with passage of time.
Fig. 23 is a diagram showing the results of the permeability tests, and showing the infiltration condition of pressurized water after splitting the samples of blast furnace cement mixed with tap water.
Fig. 24 is a diagram showing the results of the permeability tests, and showing the infiltration condition of pressurized water after splitting the samples of blast furnace cement mixed with seawater.
Fig. 25 is a diagram showing the results of the permeability tests, and showing the infiltration condition of pressurized water after splitting the samples of nitrite-based admixtures added blast furnace cement mixed with seawater.
Fig. 26 is a diagram showing the results of the permeability tests, and showing the infiltration condition of pressurized water after splitting the samples of nitrite-based admixtures and silica fume added blast furnace cement mixed with seawater.
Fig. 27 is a diagram showing the results of the permeability tests, and showing the infiltration condition of pressurized water after splitting the samples of ordinary Portland cement mixed with tap water.
Fig. 28 is a diagram showing the results of the permeability tests, and showing the infiltration condition of pressurized water after splitting the samples of ordinary Portland cement mixed with seawater.
Fig. 29A is a diagram showing the coefficients of permeability for each sample.
Fig. 29B is a diagram showing the coefficients of permeability for each sample.
Fig. 30 is a diagram illustrating a column structure as a concrete structure.

In the following, the embodiments of the present invention will be discussed. In the present embodiment, compressive strength tests, durability tests and permeability tests were conducted as tests for understanding the behavior of seawater mixed concrete.

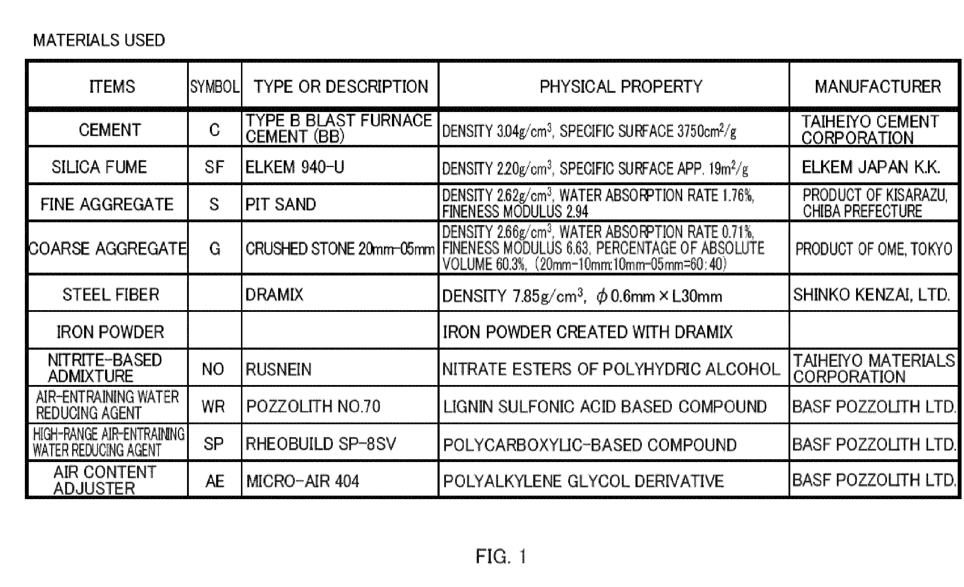

First, the materials used in the present tests will be explained. The materials used are shown in Fig. 1.

Cement used in the tests was type B blast furnace cement (blast furnace cement whose blast furnace slag replacement rate is between 30% and 60%) produced by Taiheiyo Cement Corporation. The density and the specific surface of this type B blast furnace cement were 3.04 g/cm³ and 3750 cm²/g, respectively. Note that, some of the tests used ordinary Portland cement as a comparison example of cement.

Silica fume being a type of pozzolan known under the name of "Elkem 940-U" available from Elkem Japan K.K. was used in the tests. The density and the specific surface of this silica fume were approximately 2.20 g/cm³ and 19 m²/g, respectively. This silica fume also works as a pore blockage agent.

Pit sand produced in Kisarazu, Chiba Prefecture was used as fine aggregate. The reason for using pit sand is to manage the salinity. In other words, seawater mixed concrete including a managed amount of salt concentration had been artificially made by using pit sand free from salinity (sodium chloride) and adding saltwater with a predetermined concentration (to be described later) at the time of mixing. Regarding the above-mentioned pit sand, its density is 2.62 g/cm³, water absorption rate 1.76% and fineness modulus 2.94. Crushed stone produced in Ome, Tokyo was used as coarse aggregate. Regarding this crushed stone, its density is 2.66 g/cm³, water absorption rate 0.71%, fineness modulus 6.63, and percentage of absolute volume 60.3%.

Steel fiber known under the name of "Dramix", a product of Shinko Kenzai, Ltd. was used. Regarding this steel fiber, the density is 7.85 g/cm³, diameter of the fiber diameter ϕ 0.6 mm, and length L 30 mm. This steel fiber also functions as sacrificial anode. Iron powder was made with the above-mentioned Dramix.

Nitrite-based admixture known under the name of "Rusnein", a product of Taiheiyo Materials Corporation was used. This admixture includes nitrite esters of polyhydric alcohol as its main component and is in a liquid form, and 3.7 kg/cm³ of chloride ions can be processed (in other words immobilized) per 10 liters of this admixture.

Air-entraining water reducing agent, high-range air-entraining water reducing agent and air content adjuster are all admixtures for concrete. "Pozzolith No. 70", being the trade name and a product of BASF Pozzolith Ltd. was used as the air-entraining water reducing agent. This air-entraining water reducing agent includes lignin sulfonic acid based compound as its major component and is in a liquid form. High-range air-entraining water reducing agent known under the name of "Rheobuild SP-8SV", a product of BASF Pozzolith Ltd., was used. This high-range air-entraining water reducing agent includes polycarboxylic-based compound as its main component and is in a liquid form. Air content adjuster under the name of "micro-air 404" being a product of BASF Pozzolith Ltd. was used. This air content adjuster includes polyalkylene glycol derivative as its main component and is in a liquid form.

Description on mixing water will follow. The mixing water used for the tests is artificial seawater made by adding salinity to tap water. The salinity concentration of this artificial seawater is adjusted to a concentration equivalent to the total amount of both seawater and sea sand borne chloride ions.

The average amount of chloride ions included in the sample seawater is 19 g/L (concentration of chlorine (Cl⁻) being 1.9%). When the molecular weight of sodium chloride is assumed to be 58, the atomic weight of sodium 23, and the atomic weight of chlorine 35, the amount of seawater borne sodium chloride will be 31 grams per liter.

With regard to sea sand, the unit quantity of sea sand is assumed to be 800 kg/m³, the unit quantity of mixing water to be 175 kg/m³, and the content by percentage of sodium chloride in sea sand to be 0.3%. In this case, the amount of sodium chloride in a unit quantity of sea sand would be 800 kg/m³ x 0.3% = 2.4 kg/m³. Accordingly, when 2.4 kg of sodium chloride is added to 175 kg of mixing water, the salinity content would be equal to the case in which sea sand is used even if pit sand not including sodium chloride were used. And then the quantity of sodium chloride included in one liter of this mixing water will be 14 grams.

From the above explanation, concrete equal to that using seawater and sea sand can be obtained even if tap water and pit sand free from salinity were used, by adding 45 grams (=31g + 14g) of sodium chloride per one liter of mixing water. Note that, the quantity of sodium chloride in a cubic meter of concrete will be 7.8 kg (=0.045 kg/m³ x 175 m³). And the concentration of chloride ions will be 4.7 kg/m³.

Description on each test will follow. First, description on the compressive strength test will be given. The compressive strength test was carried out on a case where the aforementioned artificial seawater was used and a case where seawater (also called real seawater) sampled from Sagami Bay was used.

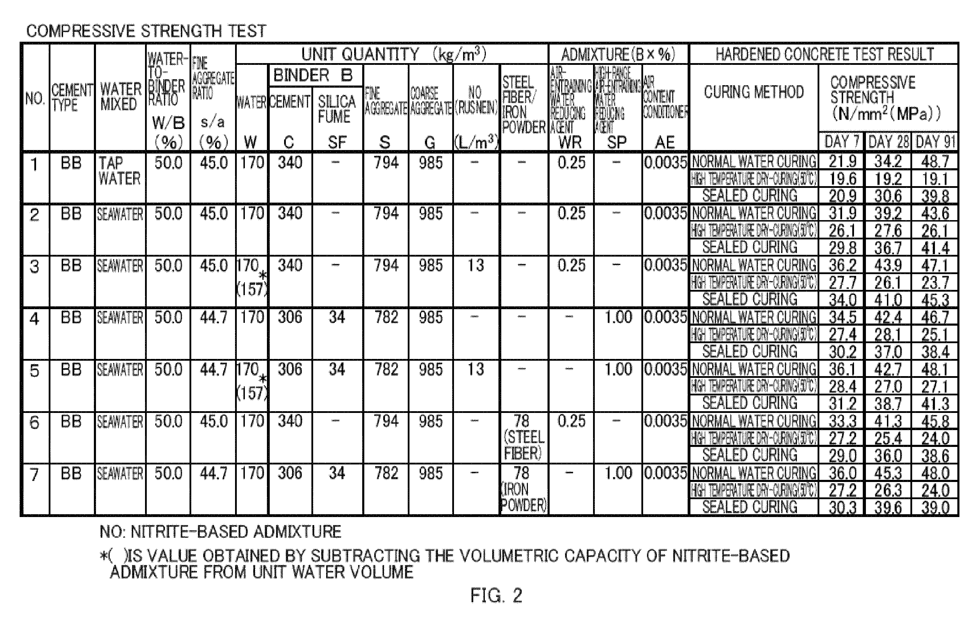

Seven types of samples shown in Fig. 2 were made for the tests using artificial seawater. Sample 1 is a comparison example where blast furnace cement was mixed with tap water. Sample 2 was made by mixing blast furnace cement with artificial seawater. Sample 3 was made by adding a nitrite-based admixture to blast furnace cement and then mixing the blast furnace cement with artificial seawater. Sample 4 was made by adding silica fume to blast furnace cement and then mixing the blast furnace cement with artificial seawater. Sample 5 was made by adding a nitrite-based admixture and silica fume to blast furnace cement and then mixing the blast furnace cement with artificial seawater. Sample 6 was made by adding steel fiber to blast furnace cement and then mixing the blast furnace cement with artificial seawater. Sample 7 was made by adding iron powder to blast furnace cement and then mixing the blast furnace cement with artificial seawater.

The water-to-binder ratio (W/B) of all the samples were set to 50%. The fine aggregate ratios of samples 1 to 3 and 6 were 45% and that of the remaining samples were 44.7%. The unit quantity of artificial seawater was set to 170 kg/m³ for all the samples. The unit quantity of binders of samples 1 to 3 and 6 were set to 340 kg/m³ for blast furnace cement, and that of the remaining samples were 340 kg/m³ for blast furnace cement and 34 kg/m³ for silica fume. The unit quantity of fine aggregates of samples 1 to 3 and 6 were set to 794 kg/m³ and that of the remaining samples were set to 782 kg/m³. The unit quantity of coarse aggregate of all the samples was set to 985 kg/m³.

Regarding nitrite-based admixtures, 13 liters per cubic meter were added to samples 3 and 5. Regarding steel fiber, 78 kilograms per cubic meter were mixed in sample 6. Regarding iron powder, 78 kilograms per cubic meter were mixed in sample 7. Regarding admixtures, air-entraining water reducing agent of an amount equivalent to 0.25% of the binders was mixed in samples 1 to 3 and 6, and high-range air-entraining water reducing agent of an amount equivalent to 1.00% of the binders was mixed in the remaining samples. Additionally, the air content conditioner of an amount equivalent to 0.0035% of the binders was mixed in all the samples.

Batch-type mixing was conducted by using a forced biaxial mixer. The quantity mixed was set to 30 liters per a single batch. Mixing was carried out by introducing coarse aggregate, fine aggregate, blast furnace cement into the mixer to be dry mixed for 10 seconds, and thereafter artificial seawater and admixtures were introduced to be mixed for 60 seconds. Note that the other materials were introduced into the mixer together with blast furnace cement or artificial seawater.

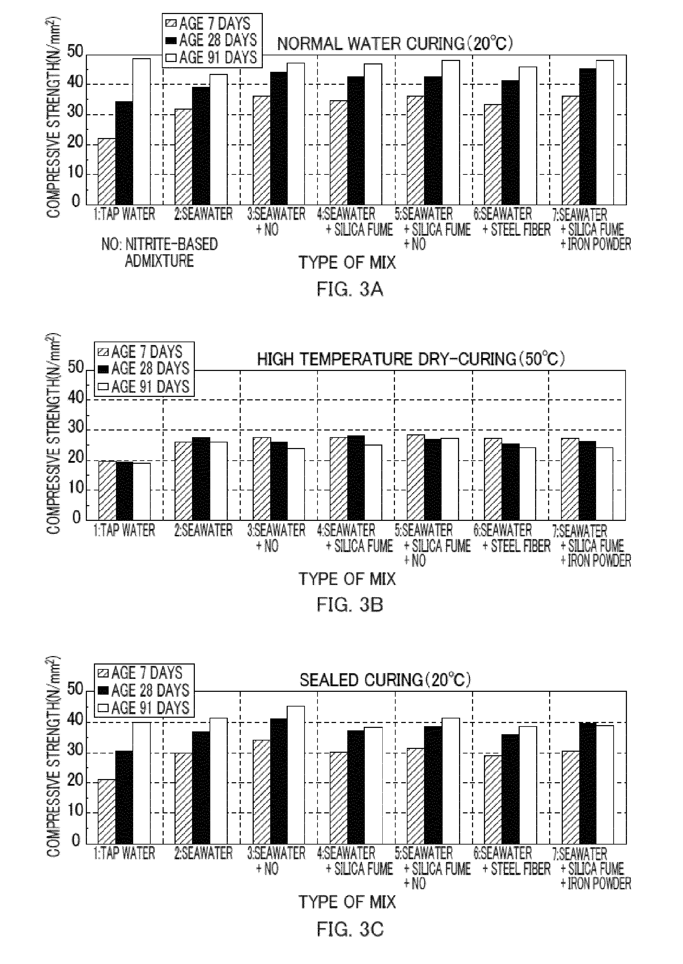

After mixing, specimens were made for each sample. Specimens were made in conformity with JIS A 1132. In other words, each sample after mixing was casted into a specific mold to be cured. Three types of curing, to be specific, normal water curing being curing by immersing the specimen in water, high-temperature dry-curing being curing by exposing the specimen to high temperature (50°C) atmosphere, and sealed curing were run. Three curing periods were set, being 7 days, 28 days and 91 days. Thereafter, compressive strength tests were carried out on the specimen immediately after the end of curing. The compressive strength test was conducted in conformity with JIS A 1108. The test results are shown in the right column of Fig. 2, and Fig. 3.

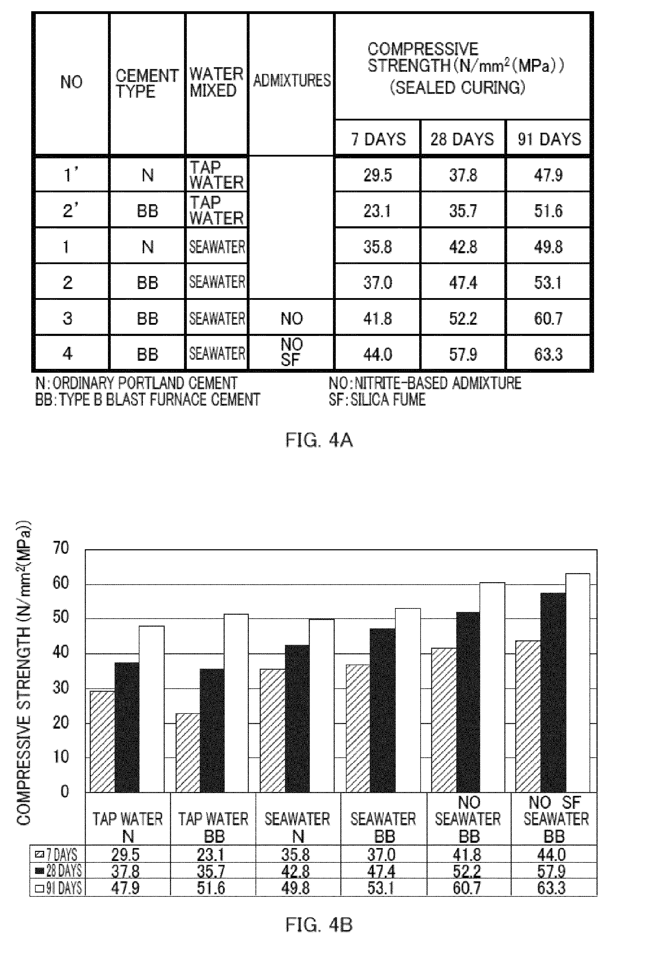

Six types of samples shown in Fig. 4A were made for the test using seawater from Sagami Bay (real seawater). Sample 1' is a comparison example made by mixing ordinary Portland cement with tap water. Sample 2' is also a comparison example made by mixing blast furnace cement with tap water. Sample 1 was made by mixing ordinary Portland cement with real seawater. Sample 2 was made by mixing blast furnace cement with real seawater. Sample 3 was made by adding nitrite-based admixture to blast furnace cement and then mixing the blast furnace cement with real seawater. Sample 4 was made by adding nitrite-based admixture and silica fume to blast furnace cement and then mixing the blast furnace cement with real seawater.

The concentration of chloride ions in real seawater was 1.83%. And sodium chloride was added to the real seawater so that the chloride ion concentration would be 4.7 kg/m³ to achieve mixing water. In this way, the salinity content was adjusted to be equivalent to that in the case sea sand was used, although pit sand was used as fine aggregate. Note that, the other conditions were the same as that of the sample using artificial seawater. Thus explanation is omitted. Additionally, explanation on the conditions on mixing are omitted since they are also the same as that for the samples using artificial seawater.

After mixing, specimens were made for each sample. Specimens were made in conformity with JIS A 1132. The curing condition for the tests was only sealed curing and two curing periods, being 7 days and 28 days, were set. Thereafter, compressive strength tests were carried out in conformity with JIS A 1108 on the specimen immediately after the end of curing. The test results are shown in the right column of Fig. 4A, and Fig. 4B.

Explanation on the compressive strength tests will follow. First, the difference on the types of mixing water and fine aggregate will be examined. The samples using artificial seawater or real seawater as mixing water were confirmed to have a tendency of developing higher compressive strengths compared to the samples using tap water as mixing water.

Specifically, as for the artificial seawater test, regarding sample 2 (blast furnace cement, artificial seawater), the compressive strengths at 7 days material age were 31.9 N/mm² (MPa) (normal water curing), 26.1 N/mm² (MPa) (high-temperature dry-curing), and 29.8 N/mm² (MPa) (sealed curing) ; the compressive strengths at 28 days material age were 39.2 N/mm² (MPa) (normal water curing), 27.6 N/mm² (MPa) (high-temperature dry-curing), and 36.7 N/mm² (MPa) (sealed curing); and the compressive strengths at 91 days material age were 43.6 N/mm² (MPa) (normal water curing), 26.1 N/mm² (MPa) (high-temperature dry-curing), and 41.4 N/mm² (MPa) (sealed curing). Further, as for the real seawater test, regarding sample 2 (blast furnace cement, real seawater), the compressive strength at 7 days material age was 37.0 N/mm² (MPa) (sealed curing), the compressive strength at 28 days material age was 47.4 N/mm² (MPa) (sealed curing), and the compressive strength at 91 days material age was 53.1 N/mm² (MPa) (sealed curing).

On the other hand, as for the artificial seawater test, regarding sample 1 (blast furnace cement, tap water), the compressive strengths at 7 days material age were 21.9 N/mm² (MPa) (normal water curing), 19.6 N/mm² (MPa) (high-temperature dry-curing), and 20.9 N/mm² (MPa) (sealed curing) ; the compressive strengths at 28 days material age were 34.2 N/mm² (MPa) (normal water curing), 19.2 N/mm² (MPa) (high-temperature dry-curing), and 30.6 N/mm² (MPa) (sealed curing); and the compressive strengths at 91 days material age were 48.7 N/mm² (MPa) (normal water curing), 19.1 N/mm² (MPa) (high-temperature dry-curing), and 39.8 N/mm² (MPa) (sealed curing). Further, regarding sample 2' for the real seawater test (blast furnace cement, tap water), the compressive strength at 7 days material age was 23.1 N/mm² (MPa) (sealed curing), the compressive strength at 28 days material age was 35.7 N/mm² (MPa) (sealed curing), and the compressive strength at 91 days material age was 51.6 N/mm² (MPa) (sealed curing).

Test results on samples of up to 28 days material age will be examined. As can be readily understood by comparing Fig. 3A to 3C leftmost columns with the second from the left most column as well as Fig. 4B second column from the left with fourth column from the left, during the period up to 28 days material age, the concrete mix using seawater and sea sand indicates a higher value than the concrete mix using tap water, pit sand and others. This means that seawater mixed concrete using seawater and sea sand hardens at a stage earlier than typical concrete. Further, the value of the compressive strength at seven days material age of the samples using seawater is equal to or higher than the compressive strength of the samples at 28 days material age using tap water.

Concrete compressive strength of a specified value (5 N/mm² (MPa)) or higher is required for the form to be removed. It can be considered from the present test results that the curing period until compressive strength of the seawater mixed concrete reaches the specified value or higher is sufficiently shorter than the curing period of typical concrete. Accordingly, the curing period until removal of the form can be sufficiently shortened compared with typical concrete when seawater mixed concrete, made with seawater and sea sand, is placed in a form.

Test results on samples of 91 days material age will be examined. The compressive strength after normal water curing of sample 1, being a comparison example, for the test using artificial seawater, indicated a high value of 48.7 N/mm² (MPa). And the compressive strength after sealed curing of sample 1 indicated 39.8 N/mm² (MPa). Whereas the compressive strength after normal water curing of sample 2 for the test using artificial seawater indicated 43.6 N/mm² (MPa) and that after sealed curing indicated 41.4 N/mm² (MPa). Although the compressive strength of sample 2 indicated a lower value than the compressive strength of sample 1 after normal water curing, the compressive strength of sample 2 indicated a higher value than the compressive strength of sample 1 after sealed curing. This means that seawater mixed concrete using seawater and sea sand can develop compressive strength equivalent to typical concrete for a long term. In other words, in terms of compressive strength, typical concrete can be replaced with seawater mixed concrete.

Next, various materials, specifically a nitrite-based admixture, silica-fume (pozzolan), steel fiber and iron powder added to blast furnace cement will be examined.

With respect to compressive strength, the compressive strength of samples 3 to 7 for the tests using artificial seawater indicated a higher value compared to sample 2 for the same test using artificial seawater. Similarly, the compressive strength of samples 3 and 4 for the tests using real seawater indicated a higher value compared to sample 2 for the same test. From this fact, it can be said that the compressive strength of seawater mixed concrete can be raised by mixing the above-mentioned material, namely, nitrite-based admixture and the like. When comparing the compressive strengths at 91 days material age of samples 3 to 7 for the tests using artificial seawater with reference to Fig. 3A, a significant difference in the compressive strengths of the samples cannot be seen.

From the description above, it can be said that all seawater mixed concrete made by adding the above-mentioned material indicates higher compressive strength than seawater mixed concrete made without adding the above-mentioned material. And also can it be said that equivalent compressive strength can be obtained even when the type of material to be added is changed.

Note that, as shown in Fig. 4B, in the real seawater test, the compressive strength at both 7 and 28 days material age of sample 3 with a nitrite-based admixture added indicated a higher value compared with the compressive strength of sample 2 free from nitrite-based admixtures. From such fact, it can be said that the adding of nitrite-based admixtures has an effect to increase the compressive strength at an early stage. Further, the compressive strength at both 7 and 28 days material age of sample 4 with nitrite-based admixture and silica fume added indicated a higher value compared with the compressive strength of sample 3. From such fact, it can be said that the adding of nitrite-based admixtures and silica fume has an effect to further increase the compressive strength of seawater mixed concrete compared with the case where only nitrite-based admixture is added.

Next, examination on the difference between blast furnace cement and ordinary Portland cement will follow. Here samples 1' , 2' , 1 and 2 in Figs. 4A and 4B are compared. In the case tap water was used for mixing, the compressive strength value at up to 28 days material age of sample 1' using ordinary Portland cement was higher than that of sample 2' using blast furnace cement. However, at 91 days material age, the compressive strength of sample 2' using blast furnace cement was higher than that of sample 1' using ordinary Portland cement. Whereas, in the case seawater was used for mixing, the compressive strength values at all material ages of sample 2 using blast furnace cement was higher than that of sample 1 using ordinary Portland cement.

Slag-containing cement including blast furnace cement is known to be effective in restraining the alkali-aggregate reaction. With this reaction, alkali ions such as sodium ions and the like react with a certain type of aggregate exhibiting expansivity. When slag-containing cement is used, it is considered that expansion of concrete can be restrained, even if a large amount of sodium ions originating from sodium chloride included in seawater and sea sand exists, owing to the slag-containing cement restraining the alkali-aggregate reaction. Accordingly, the use of slag-containing cement is effective from the viewpoint of increasing durability of concrete when using seawater and sea sand.

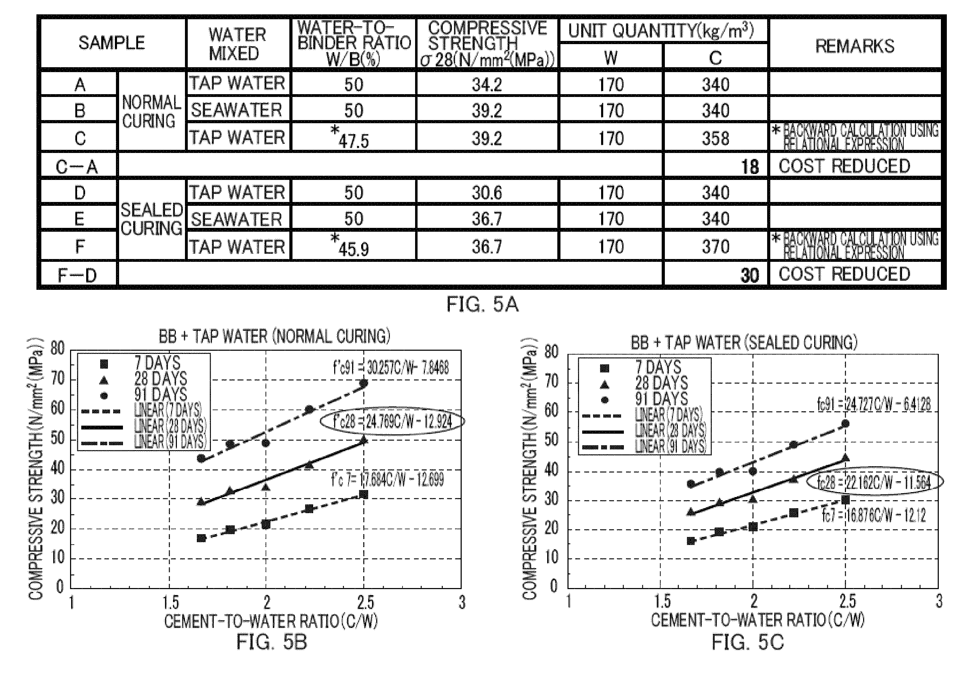

Next, reduction of cement usage by using seawater and sea sand will be discussed with reference to Figs. 5A through 5C.

Sample A in Fig. 5A is sample 1 (comparison example using tap water) for the test using artificial seawater, and sample B is sample 2 for the same aforementioned test (including salinity equivalent to that of seawater and sea sand). Both samples A and B were cured by normal water curing and the material age, 28 days. Further sample C has a compressive strength approximately the same as sample B and is a virtual sample obtained when using tap water. This sample C has been calculated using the relational expression f'c28 (f'c28 = 24.769 x C / W - 12.924) shown in Fig. 5B.

Similarly, samples D and E in Fig. 5A are samples 1 and 2 for the test using artificial seawater, and the material age 28 days. Samples D and E differ from samples A and B on the point that the curing method employed is sealed curing. Further, sample F has compressive strength approximately the same as sample E and is a virtual sample obtained when using tap water. This sample F has been calculated using the relational expression fc28 (fc28 = 22.162 x C / W - 11.564) shown in Fig. 5C.

Both samples A and B were made by mixing cement of 340 kg/m³ and water of 170 kg/m³ (tap water or artificial seawater). The compressive strength of sample A was 34.2 N/mm² (MPa) whereas the compressive strength of sample B was 39.2 N/mm² (MPa) indicating higher compressive strength than sample A.

The corresponding cement-water ratio (C/W) was calculated by substituting 39.2 N/mm² (MPa) into f'c28 of relational expression f'c28 in Fig. 5B. Further, W = 170 kg/m³ was substituted into the obtained cement-water ratio to calculate the cement content of sample C. The cement content of sample C was calculated to be 358 kg/m³. Therefore, it was found that 18 kg of cement per cubic meter of concrete can be saved by using seawater and sea sand instead of the combination of tap water and pit sand, when a concrete structure is constructed adopting normal water curing the concrete structure having a compressive strength of 39.2 N/mm² (MPa) at 28 days material age.

The same calculation procedures were taken for samples D through F. As a result, it was found that 30 kg of cement per cubic meter of concrete can be saved by using seawater and sea sand instead of the combination of tap water and pit sand, when a concrete structure having a compressive strength of 36.7 N/mm² (MPa) at 28 days material age is constructed adopting sealed curing.

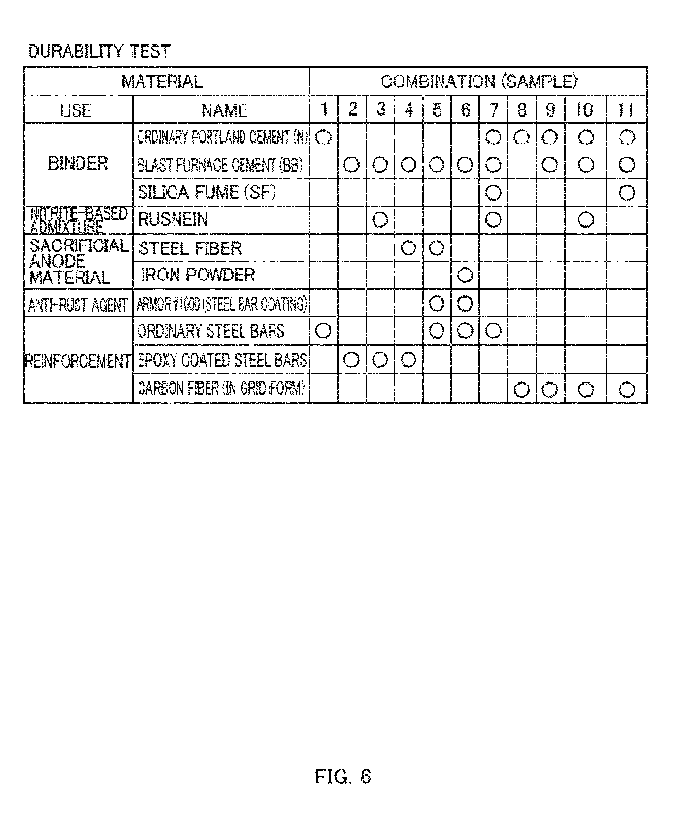

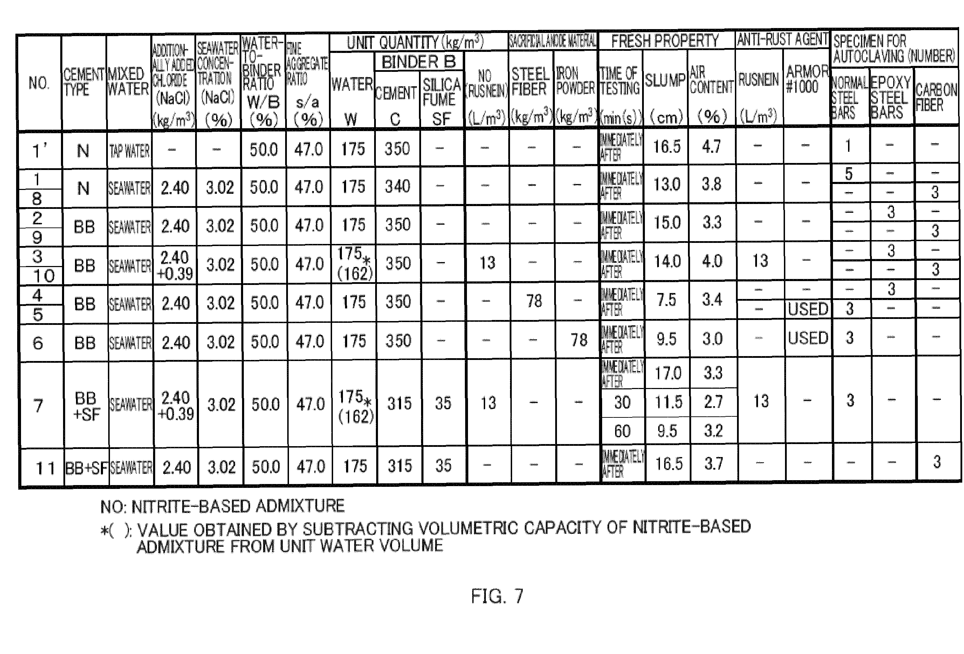

Description on the durability test will follow. 11 types of samples including reinforcement of mix proportions shown in Fig. 6 and Fig. 7 were made for the durability test. And the durability of the samples was tested by repetitively conducting the accelerated corrosion tests. Note that, sample 1' shown in Fig. 7 is a comparison example made by mixing ordinary Portland cement with tap water.

Description on the materials used will follow. Here, description on materials used different from those explained above will be given and description on the same materials will be omitted.

Regarding mixing water, seawater here is seawater (real seawater) from Sagami Bay sampled from the fishing port of Chigasaki. The sodium chloride concentration of this real seawater was 3.02% (the chloride ion concentration was 1.83%). Regarding fine aggregates, pit sand was also used for this durability test and sodium chloride was added so as to equal the amount of salt included in sea sand. Anti-rust agent under the name of Armor #1000, a product of Mitsubishi Materials Corporation, was used to coat the surface of ordinary steel bars. Reinforcement is for developing the tensile strength of concrete structures and in this durability test, three types, namely, ordinary steel bars, epoxy coated steel bars and carbon fiber (hardened with resin) formed into grids were used.

Description on the samples will follow. Regarding the binder, only ordinary Portland cement was used for samples 1, 1' and 8. The unit quantity of the binder for sample 1', being a comparison example, was set to 350 kilograms per cubic meter and that for samples 1 and 8 were set to 340 kilograms per cubic meter. Type B blast furnace cement (ordinary Portland cement + blast furnace slag) was used for samples 2 to 6, 9 and 10 and the unit quantity was set to 350 kilograms per cubic meter. A mixture of type B blast furnace cement and silica fume was used for samples 7 and 11 and the unit quantity was set to 350 kilograms (type B blast furnace cement: 315 kg and silica fume: 35 kg) per cubic meter.

As a nitrite-based admixture, Rusnein was added to samples 3, 7 and 10. The unit quantity of Rusnein was set to 13 liters per cubic meter. Regarding sacrificial anode materials, steel fiber was used for samples 4 and 5 and iron powder was used for sample 6. The mixed quantity of steel fiber and iron powder were 78 kilograms per cubic meter of the sample for both cases and they were mixed at the time of water mixing. Regarding reinforcement, ordinary steel bars were used for samples 1, 1' and 5 to 7, epoxy coated steel bars were used for samples 2 to 4, and carbon fiber was used for samples 9 to 11. Note that, the ordinary steel bars used in samples 5 and 6 are rust proofed by coating Armor #1000 on their surfaces.

Each sample was poured into a mold with a diameter ϕ of 100 mm and a height of 200 mm to be cured in an autoclave curing device. Accelerated corrosion tests were conducted by the autoclave method with this autoclave curing device. Specifically, the temperature inside the autoclave was set to 180 °C and the pressure to 10 atm pressure (1,013,250 N/m²) , and maintained for eight hours. The aforementioned operation was counted as a single cycle to be repeated once, 5, 10, 20 and 33 times to confirm the corrosion condition of the reinforcement.

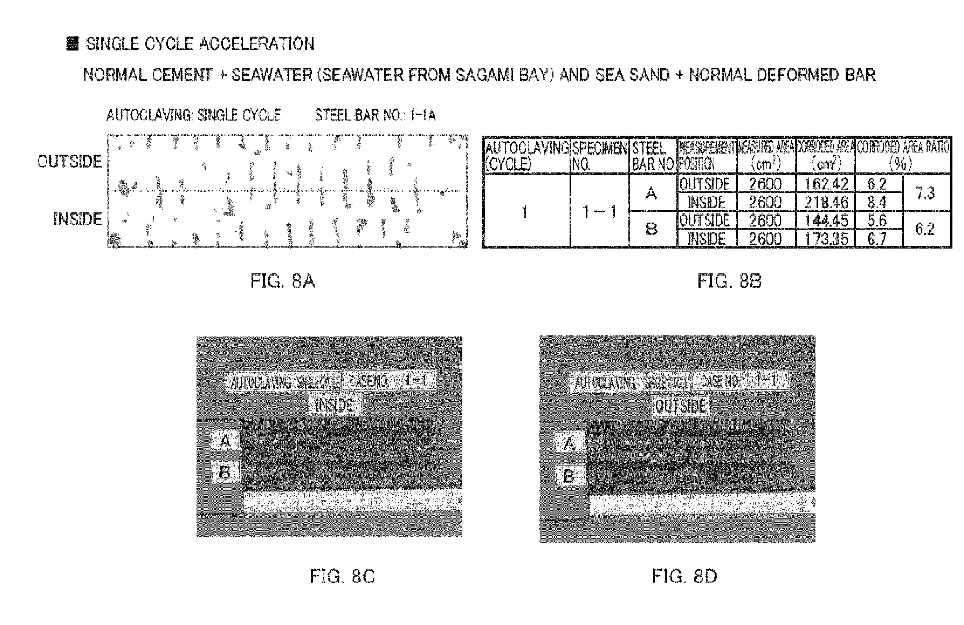

Note that a single cycle under the above condition is equivalent to three years of natural exposure. Therefore, five cycles is equivalent to 15 years of natural exposure and 10 cycles is equivalent to 30 years of natural exposure. Similarly, 20 cycles is equivalent to 60 years of natural exposure and 33 cycles is equivalent to 99 years of natural exposure. Note that with this assessment, it is determined that the sample possesses a durability of 100 years and more under natural exposure when the reinforcement are uncorroded after 33 cycles. The test results are shown in Figs. 8 to 21.

First, description on the test results of the single and five cycle accelerations will follow. Note that, the single and five cycle accelerations were conducted on sample 1, described with Figs. 6 and 7, that is, the sample using ordinary steel bars as reinforcement.

Figs. 8A to 8D show the tests results of the single cycle acceleration. Fig. 8A is a diagram having transfer printed the corroded parts on the circumference surface of the ordinary steel bars being the reinforcement. In Fig. 8A, the parts in gray correspond to the corroded parts. Fig. 8B is a diagram explaining the corroded area and its ratio. Fig. 8C is a photograph of the inside of the two ordinary steel bars embedded in the specimen (the center side of the cylindrical specimen). Fig. 8D is photograph of the outside (the surface side of the cylindrical specimen).

It is known here that there is a relation between the amount of corroded steel bars (mg/cm²) obtained from the accelerated corrosion test and the number of years elapsed after starting of corrosion. Further, it is known that when section loss around the whole circumference of the steel bars is recognized or when 1/6 or more of the steel bar area is lost, the steel bars lose a function as reinforcement and new steel bars welded thereto are required.

As shown in Figs. 8A and 8D, although slight corrosion is recognized partially after the single cycle acceleration, section loss has not developed around the whole circumference of the steel bars. Further, as shown in Fig. 8B, the corroded area ratio is approximately 6-7%. From such facts, it can be determined that after approximately three years of exposure, ordinary steel bars would not lose their function as reinforcement even if they were embedded as reinforcement in seawater mixed concrete including a large amount of salinity.

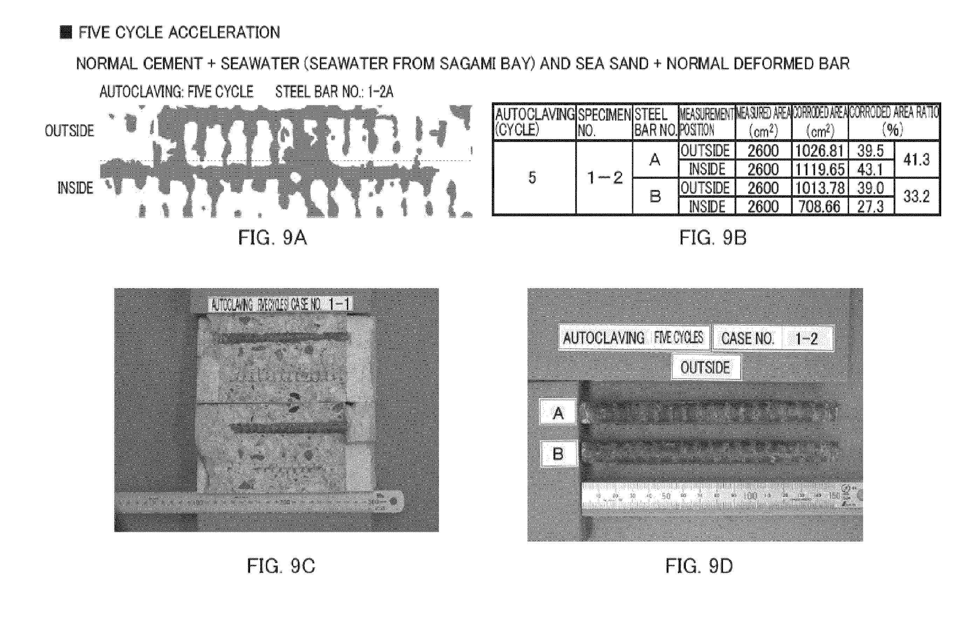

Figs. 9A to 9D show the test results of the five cycle acceleration. Explanation of Figs. 9A, 9B and 9D is omitted since they are the same as that for Figs. 8A, 8B and 8D. Fig. 9C shows a photograph of the specimen split into two along the direction of the diameter. As shown in Fig. 9A, it can be noticed that loss of cross section has developed around the whole circumference of the steel bars as a result of the five cycle acceleration. Additionally, it can be noticed by comparing Fig. 8D with Fig. 9D that the corroded area has expanded after the five cycle acceleration compared to that after the single cycle acceleration. Further, Fig. 9B shows that the corroded area ratio has increased to approximately 30-40%. From such facts, it can be determined that ordinary steel bars would lose their function as reinforcement after approximately 15 years when they are embedded in seawater mixed concrete.

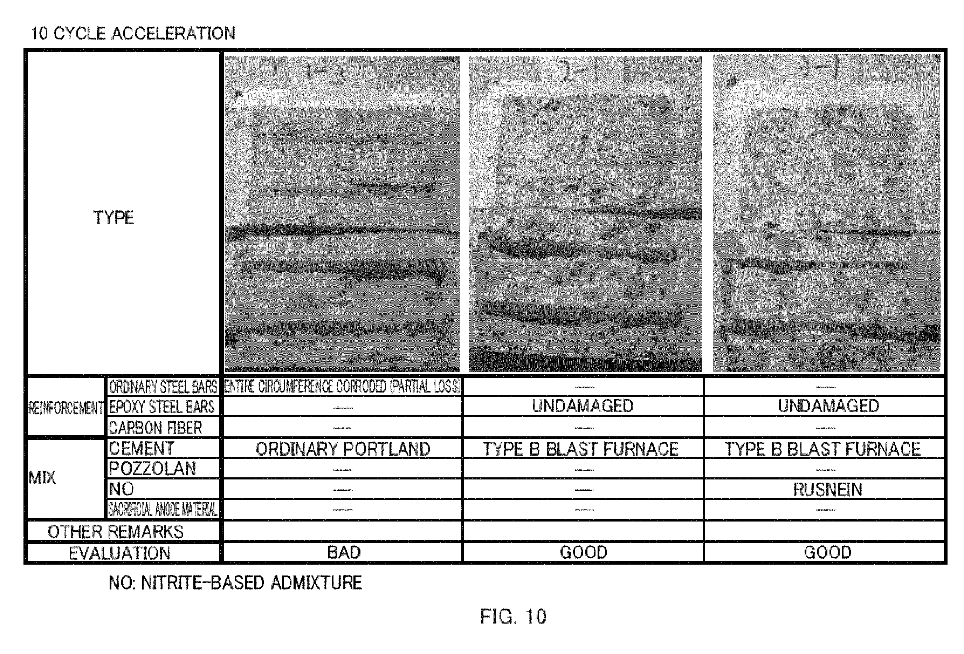

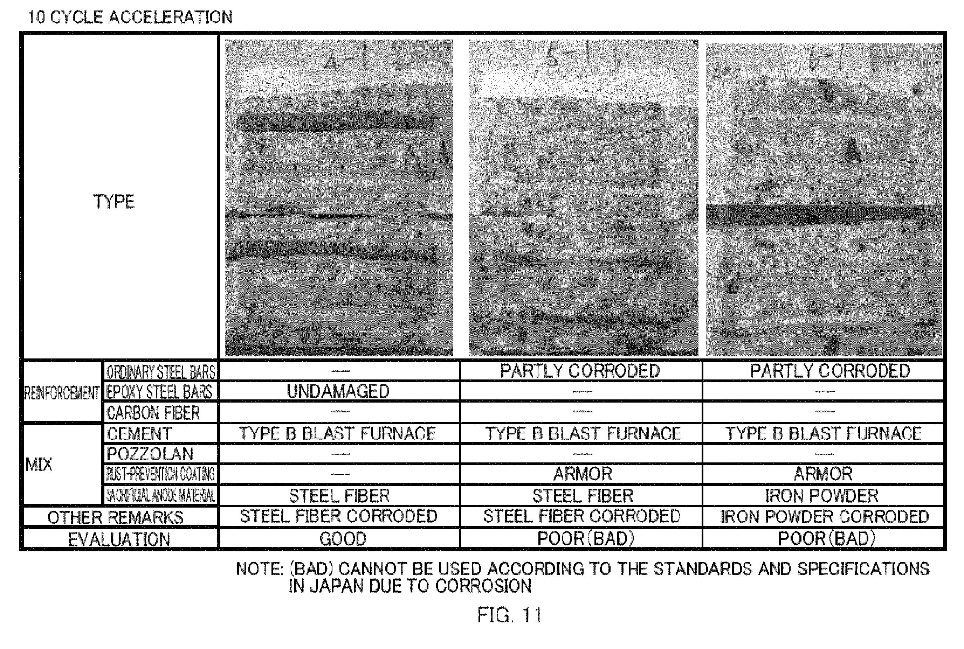

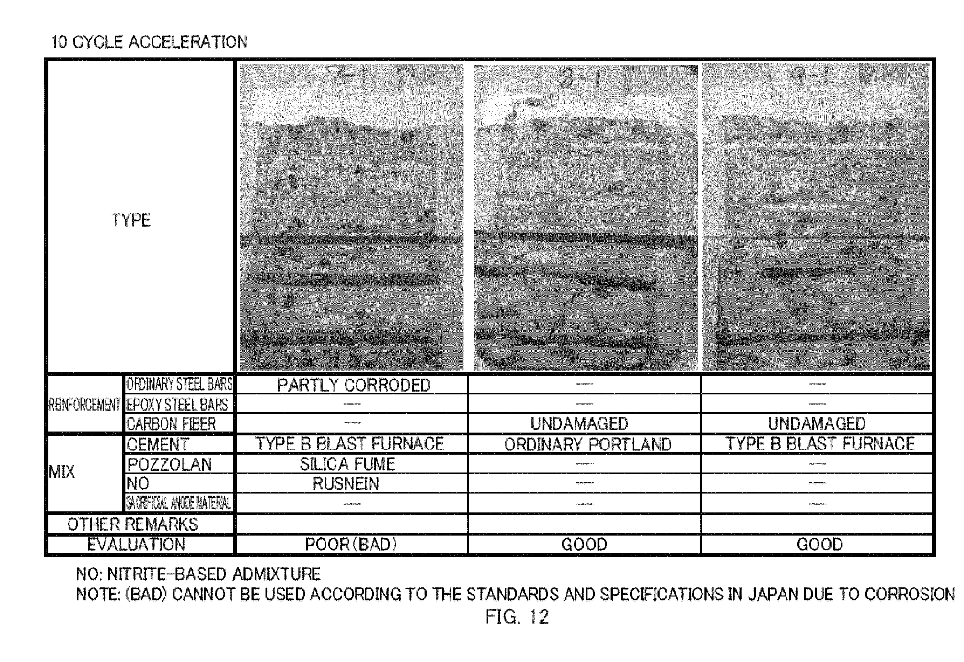

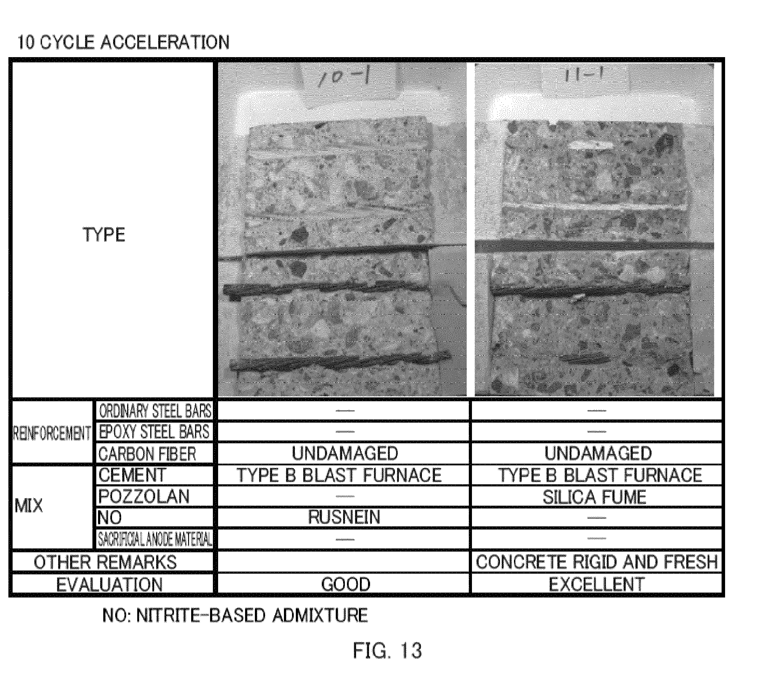

Next, description on the test results of the 10 cycle acceleration will follow. Figs. 10 through Fig. 13 show the test results of the 10 cycle acceleration with photographs. Specifically, Fig. 10 shows the test results on samples 1 through 3 and Fig. 11 shows those on samples 4 through 6. Similarly, Fig. 12 shows the test results on samples 7 through 9 and Fig. 13 shows those on samples 10 and 11.

As shown in Fig. 10, corrosion around the whole circumference and loss of cross section by corrosion of ordinary steel bars had been confirmed with sample 1. Since corrosion had spread compared with the case of the five cycle acceleration, it can be said that the results here support the results obtained from the five cycle acceleration test.

As shown in Figs. 11 and 12, it was confirmed that partial corrosion of ordinary steel bars had started on all of the cases being samples 5 and 6 using rust proof coated ordinary steel bars as reinforcement as well as sacrificial anode (steel fiber, iron powder) applied and sample 7 using ordinary steel bars as reinforcement as well as having a nitrite-based admixture used therewith. Measures taken against salinity for concrete structures constructed with seawater mixed concrete is considered to be effective for those with a short life period of up to about 30 years but is understood to be inadequate when their life period is equal to or more than 30 years.

As shown in Fig. 10, defects were not found with epoxy coated steel bars being undamaged regarding sample 2 using epoxy coated steel bars as reinforcement, and sample 3 using epoxy coated steel bars as reinforcement as well as having a nitrite-based admixture used therewith. As shown in Fig. 11, although there were seen corrosion of steel fibers, the epoxy coated steel bars were undamaged regarding sample 4 using epoxy coated steel bars as reinforcement and sacrificial anode (steel fiber) applied.

From the above results, it was confirmed that concrete structures constructed with seawater mixed concrete can be adequately used even for concrete structures whose life period is 30 years or more by using epoxy coated steel bars as reinforcement.

As shown in Figs. 12 and 13, favorable results were obtained with all of samples 8 through 11 using carbon fiber as reinforcement. Specifically, sample 8 using ordinary Portland cement mixed with seawater and reinforcement formed with carbon fiber was confirmed undamaged. Sample 9 using blast furnace cement mixed with seawater and using reinforcement formed with carbon fiber was also confirmed undamaged. Sample 10 using blast furnace cement having nitrite-based admixtures added thereto and then mixed with seawater, and using reinforcement formed with carbon fiber as well was confirmed undamaged. The concrete of sample 11 using blast furnace cement having pozzolan added thereto and then mixed with seawater, and using reinforcement formed with carbon fiber was rigid and fresh.

From the results above, it was confirmed that concrete structures constructed with seawater mixed concrete can be adequately used for concrete structures whose life period is 30 years or more by using carbon fiber as reinforcement.

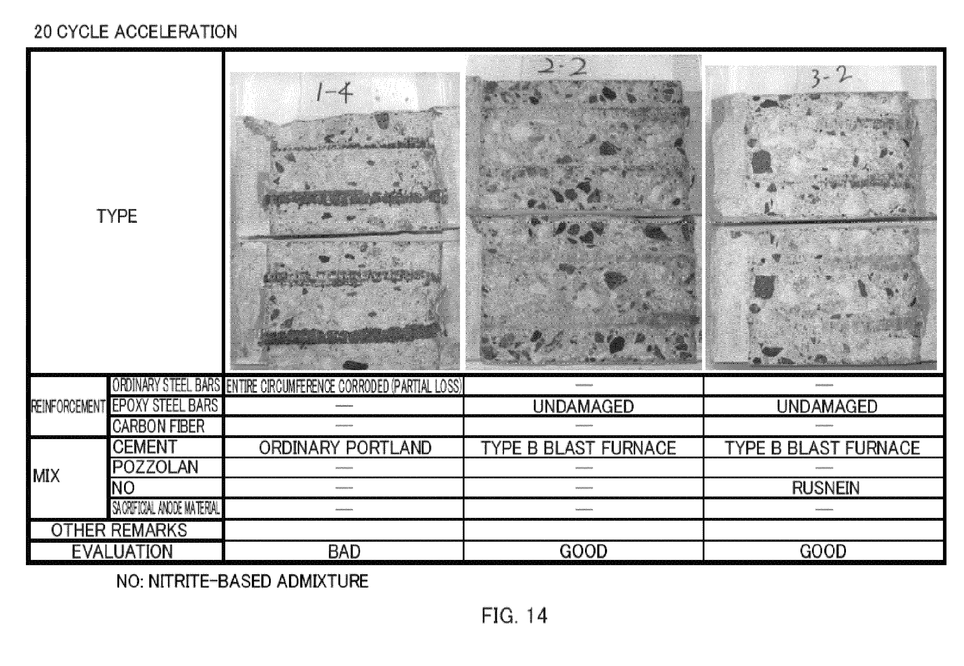

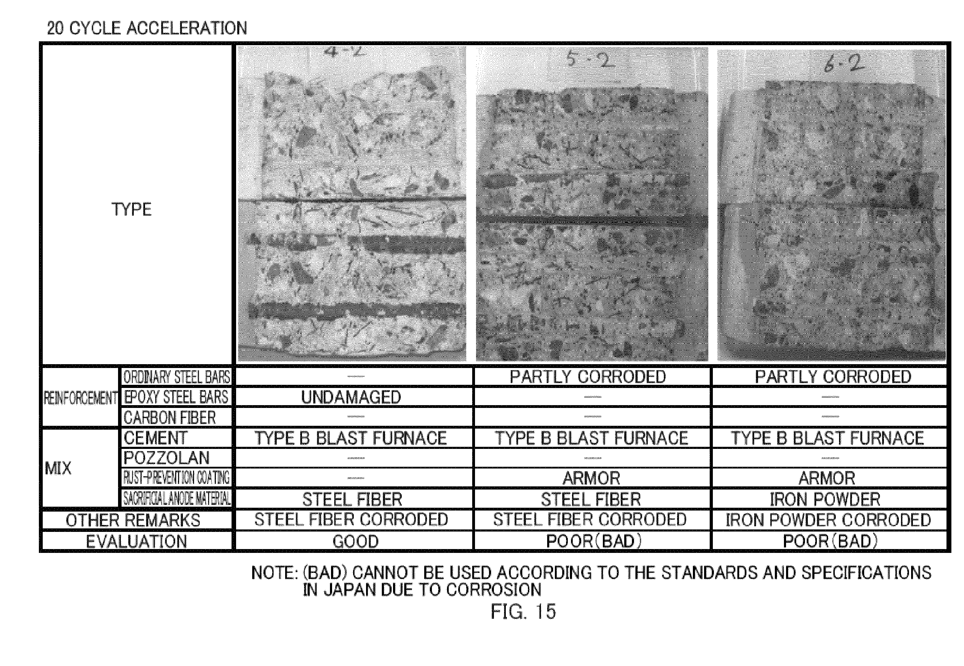

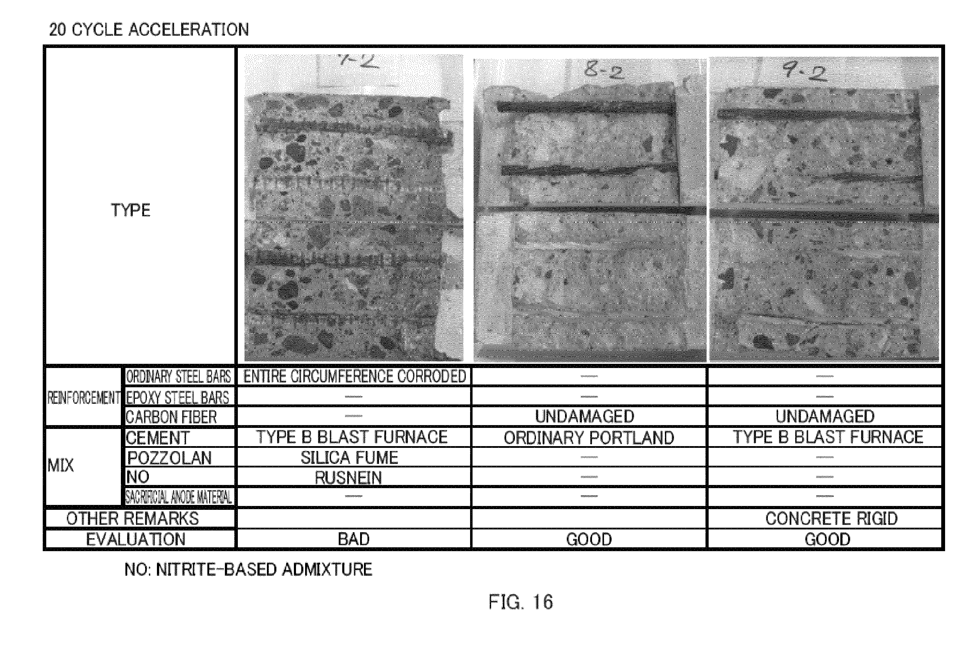

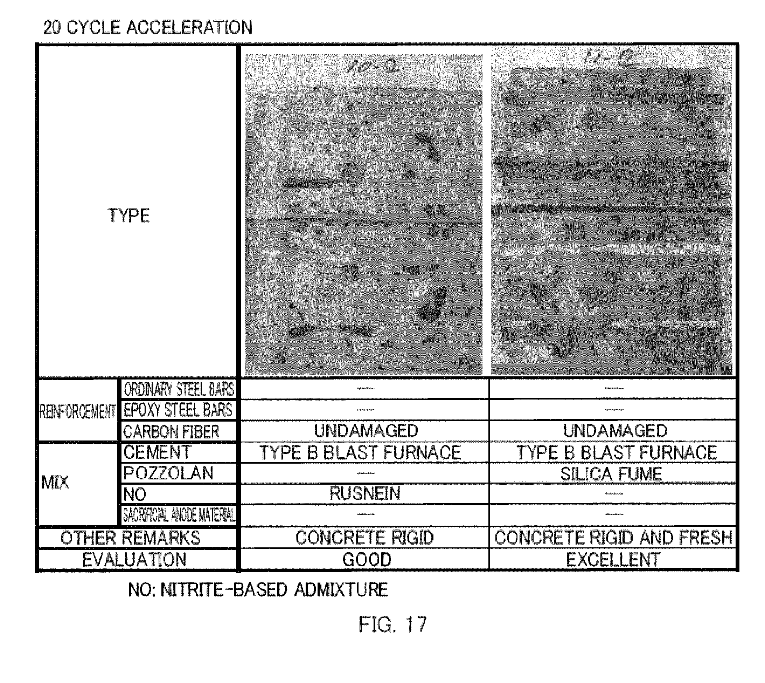

Next, description on the 20 cycle acceleration test results will follow. Figs. 14 through Fig. 17 show the 20 cycle acceleration test results with photographs. Specifically, Fig. 14 shows the test results on samples 1 through 3 and Fig. 15 show those on samples 4 through 6. Similarly, Fig. 16 shows the test results on samples 7 through 9 and Fig. 17 show those on samples 10 and 11.

As shown in Figs. 14 and 16, corrosion around the entire circumference was confirmed with samples 1 and 7 using ordinary steel bars. And as shown in Fig. 15, partial corrosion was confirmed with samples 5 and 6 using ordinary steel bars coated with anti-rust. Additionally, corrosion of sacrificial anode was found with samples 5 and 6. Further spreading of corrosion compared with the 10 cycle acceleration test results was confirmed with samples 5 through 7.

From the results above, it was confirmed that concrete structures constructed with seawater mixed concrete are inadequate for structures whose life period is assumed to be approximately 60 years, in the case ordinary steel bars are used as reinforcement, even if anti-rust is coated on the surfaces of the steel bars or even if a nitrite-based admixture and a sacrificial anode are used. This result supports the results of the 10-cycle acceleration tests.

As shown in Figs. 14 and 15, results similar to those from the 10 cycle acceleration test was obtained for all samples 2 through 4 using epoxy coated steel bars as reinforcement. In other words, samples 2 and 3 were undamaged and regarding sample 4, although corrosion of steel fiber was confirmed, epoxy coated steel bars maintained undamaged.

From the results above, it was confirmed that concrete structures constructed with seawater mixed concrete can be adequately used for structures whose life period is 60 years or more by using epoxy coated steel bars as reinforcement.

As shown in Figs. 16 and 17, favorable results were obtained in all of samples 8 through 11 using reinforcement formed with carbon fiber. In particular, concretes of samples 9 and 10 were confirmed rigid, and the concrete of sample 11 was confirmed rigid and fresh.

From the results above, it was confirmed that concrete structures constructed with seawater mixed concrete can be adequately used for structures whose life period is 60 years or more by using carbon fiber as reinforcement.

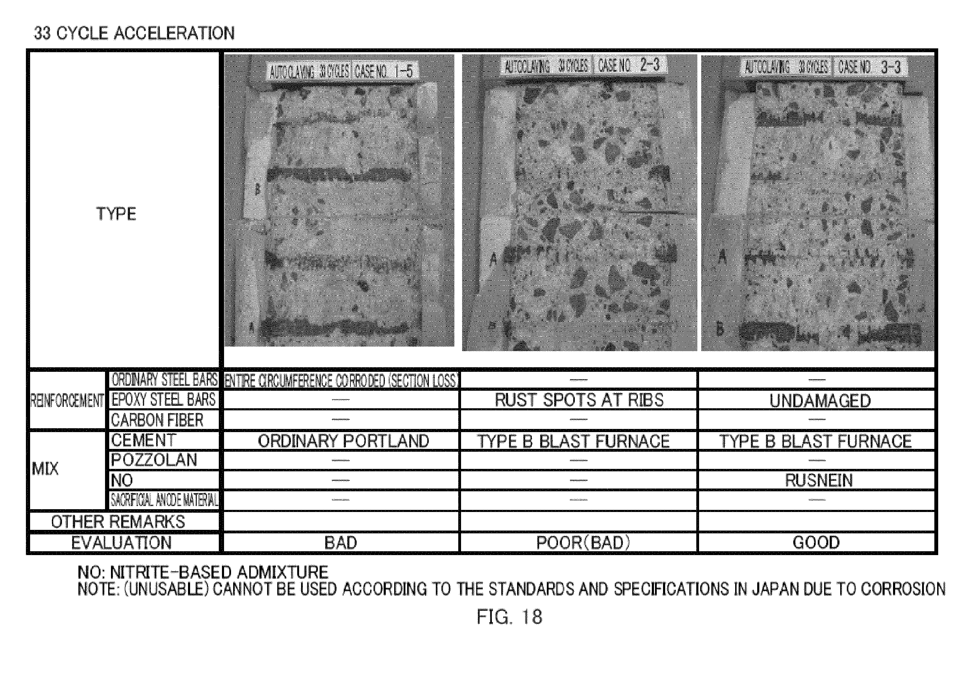

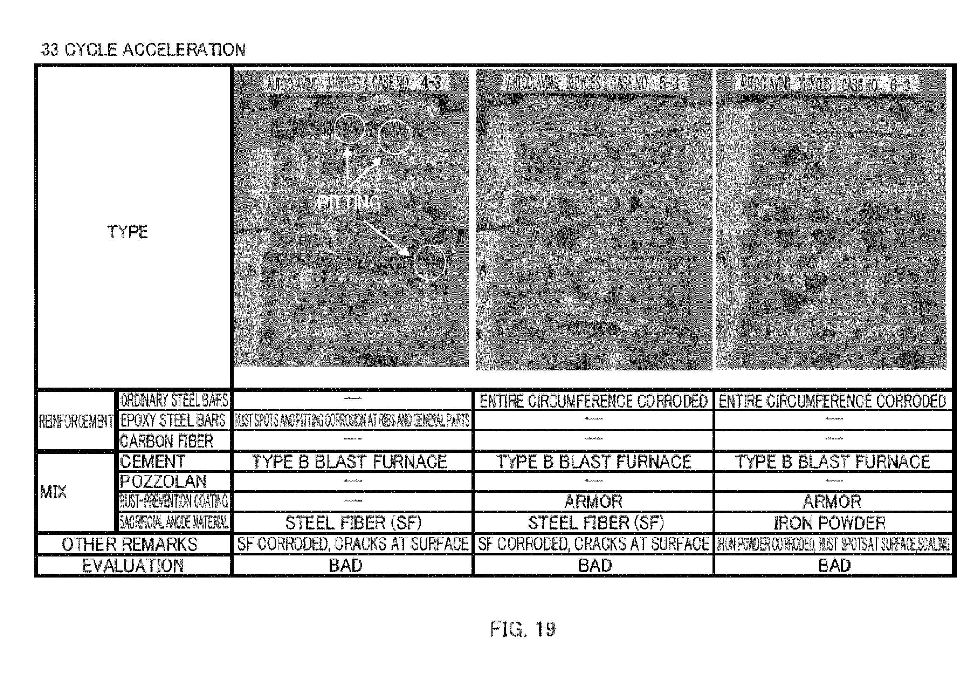

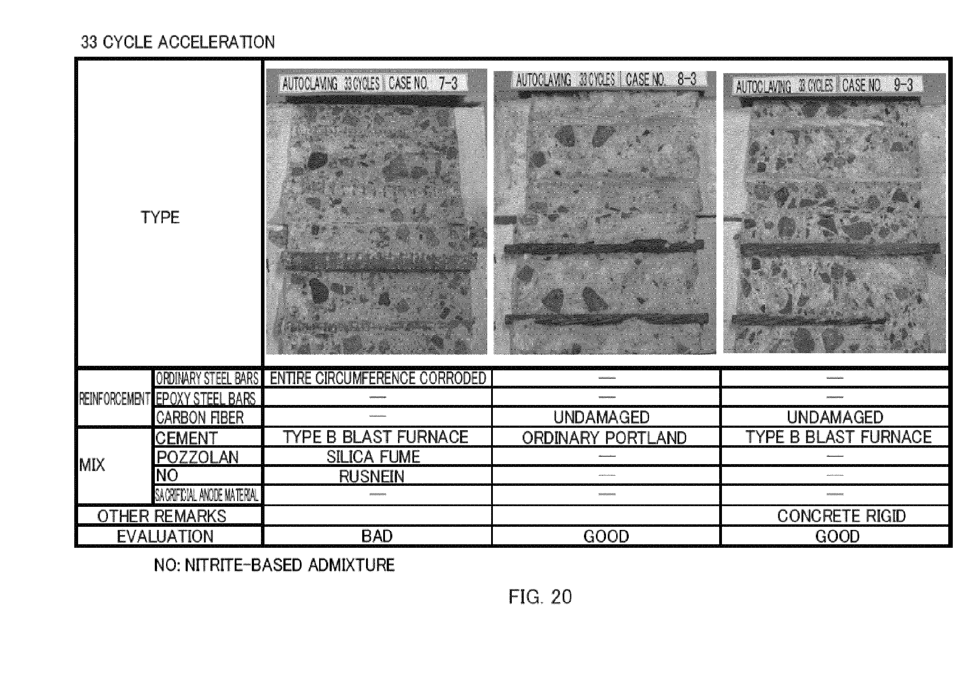

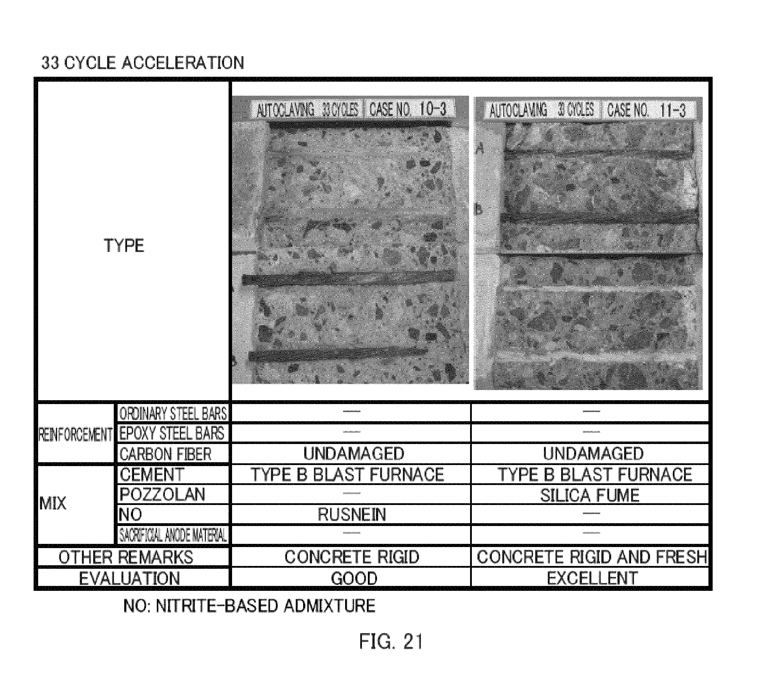

Next, description on the 33 cycle acceleration test results will follow. Figs. 18 through Fig. 21 show the 33 cycle acceleration test results with photographs. Specifically, Fig. 18 shows the test results on samples 1 through 3 and Fig. 19 shows those on samples 4 through 6. Similarly, Fig. 20 shows the test results on samples 7 through 9 and Fig. 21 shows those on samples 10 and 11.

As shown in Figs. 18 and 20, corrosion around the entire circumference was confirmed with samples 1 and 7 using ordinary steel bars. In particular, loss of cross section of steel bars was also recognized with sample 1. Further, as shown in Fig. 19, corrosion around the entire circumference was also confirmed with samples 5 and 6 using ordinary steel bars coated with anti-rust. Additionally, corrosion of silica fume and cracks on the specimen surface were observed with sample 5. Further, corrosion of iron powder, rust spots at the specimen surface, and scaling (surface detachment) were confirmed with sample 6. These results also support the test results obtained on the 10 cycle acceleration.

As shown in Figs. 18 and 19, among samples 2 through 4 using epoxy coated steel bars as reinforcement, sample 3 using a nitrite-based admixture was confirmed undamaged. In contrast, rust spots were observed at the ribs of epoxy coated steel bars with sample 2 being a combination of blast surface cement and epoxy coated steel bars. Corrosion of steel fiber as well as rust spots and pitting at the ribs and general parts of epoxy coated steel bars were recognized with sample 4 using sacrificial anode (steel fiber). Further, cracks at the specimen surface were also observed.

From the results above, it was confirmed that concrete structures constructed with seawater mixed concrete can be adequately used even for structures whose life period is 100 years or more by combining a nitrite-based admixture in the case epoxy coated steel bars are used as reinforcement. However, epoxy coated steel bars were confirmed inadequate for structures whose life period is assumed to be approximately 100 years, in the case sacrificial anode is used, or only blast furnace cement is used.

As shown in Figs. 20 and 21, favorable results were obtained in all of samples 8 through 11 using reinforcement formed with carbon fiber. In particular, concretes of samples 9 and 10 were confirmed rigid, and the concrete of sample 11 was confirmed rigid and fresh.

From the results above, it was confirmed that concrete structures constructed with seawater mixed concrete can be adequately used for structures whose life period is 100 years or more by using carbon fiber as reinforcement.

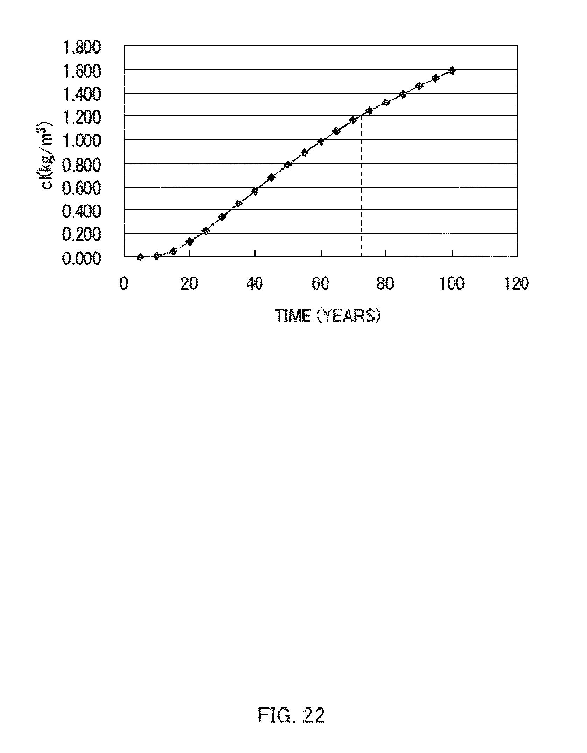

Here, the life period of concrete structures using epoxy coated steel bars as reinforcement will be examined. Fig. 22 shows the change in the amount of chloride ions inside epoxy coated steel bars with the passage of time, calculated based on diffusion theory. This calculation assumes that the quantity of chloride ions inside concrete is 5 kg/cm³, the diffusion coefficient of chloride ions in epoxy coated steel bars is 2.00 x 10⁻⁶ cm²/y, and the thickness of epoxy coating of the steel bars is 0.02 cm.

There is a correlation between the quantity of chloride ions inside epoxy coated steel bars and the amount of corrosion of the steel bars. And in order to make the epoxy coated steel bars function as reinforcement, the quantity of chloride ions inside epoxy coated steel bars is required to be 1.200 kg/m³ or less. According to the calculation results of Fig. 22, the time when the quantity of chloride ions reaches 1.200 kg/m³ is a little longer than 70 years. Being the case, it can be expected that concrete structures whose life period is 70 years or less can use seawater mixed concrete when epoxy coated steel bars are used as reinforcement.

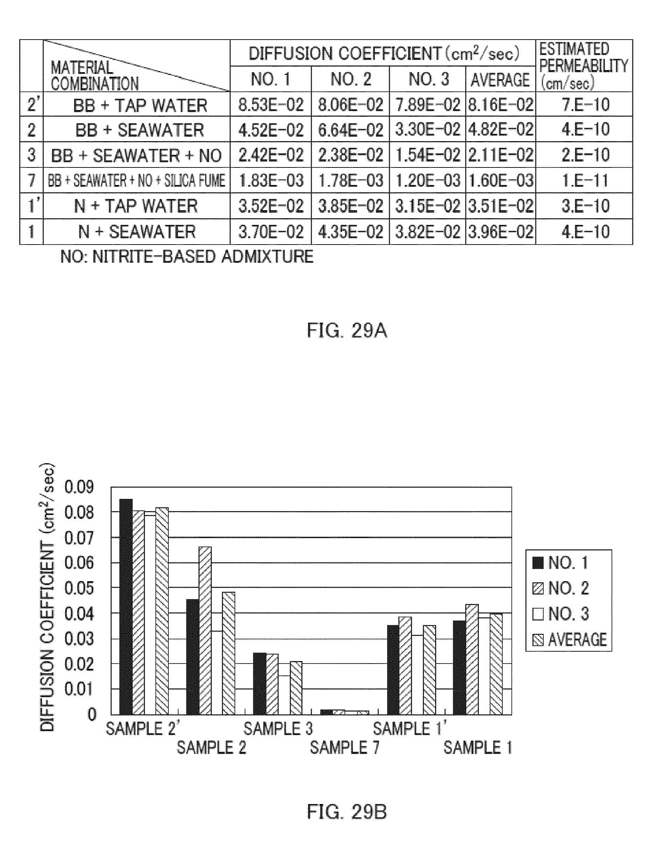

Next, description on the permeability test will follow. Six types of samples shown in Fig. 29 were made for the permeability test. The mix of the samples is the same with the samples explained with Figs. 6 and 7. Specifically, sample 1' is a comparison example made by mixing ordinary Portland cement with tap water. Sample 1 was made by mixing ordinary Portland cement with real seawater. Sample 2 was made by mixing blast furnace cement with real seawater. Sample 3 was made by mixing blast furnace cement with a nitrite-based admixture added, and real seawater. Sample 7 was made by mixing blast furnace cement with nitrite-based admixture and silica fume added, and real seawater. Note that sample 2' is a comparison example where blast furnace cement is mixed with tap water. And the amount of salt retained in sea sand was adjusted by adding a required amount of sodium chloride.

Each sample was placed in a mold having a diameter of ϕ 100 mm and a height of 200 mm, and was seal cured up to 28 days to make the specimen. The specimen made was set in a pressure container and provided with pressurized water. The specimen to which pressurized water was provided, was halved (split into two) along the axial direction to measure the permeation depth of pressurized water in the specimen. The diffusion coefficient was obtained based on the measured permeation depth, and the estimated permeability factor was obtained based on the calculated diffusion coefficient. Note that, three specimens were made for one kind of sample and the average diffusion coefficient for the three specimens was set as the diffusion coefficient of the sample (refer to Figs. 29A and 29B.)

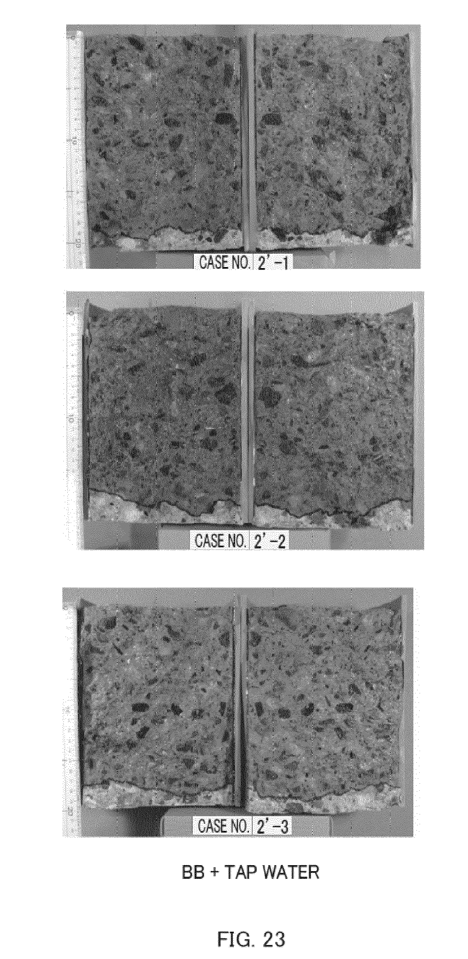

The permeability conditions of pressurized water are shown in photographs of the cross sections in Figs. 23 through 28. Note that in the figures, photographs of the cross sections of three specimens are shown at the top, center and bottom, respectively.

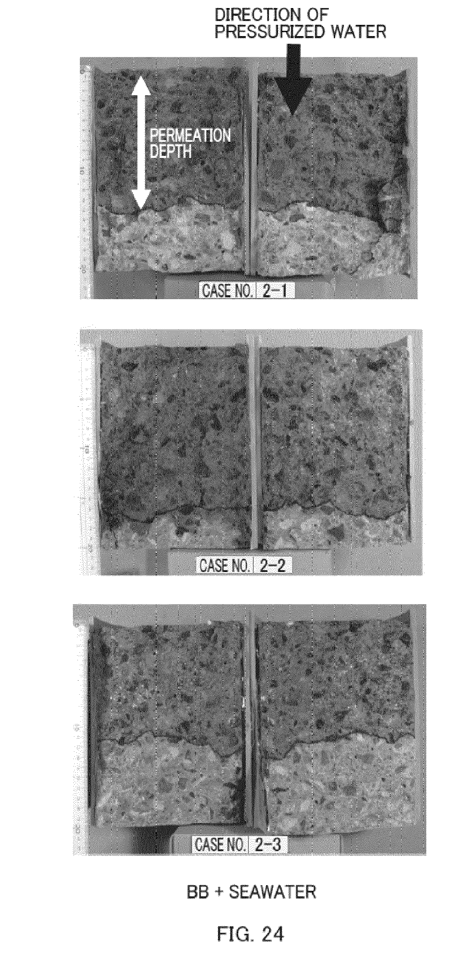

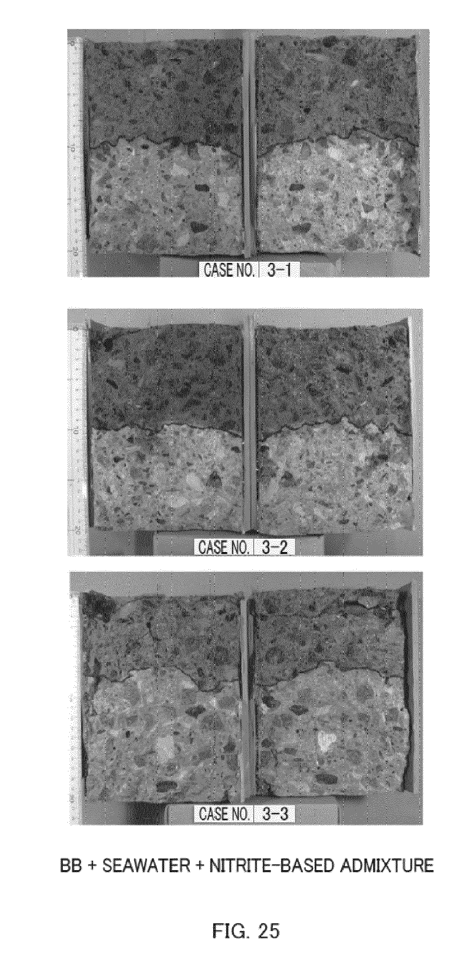

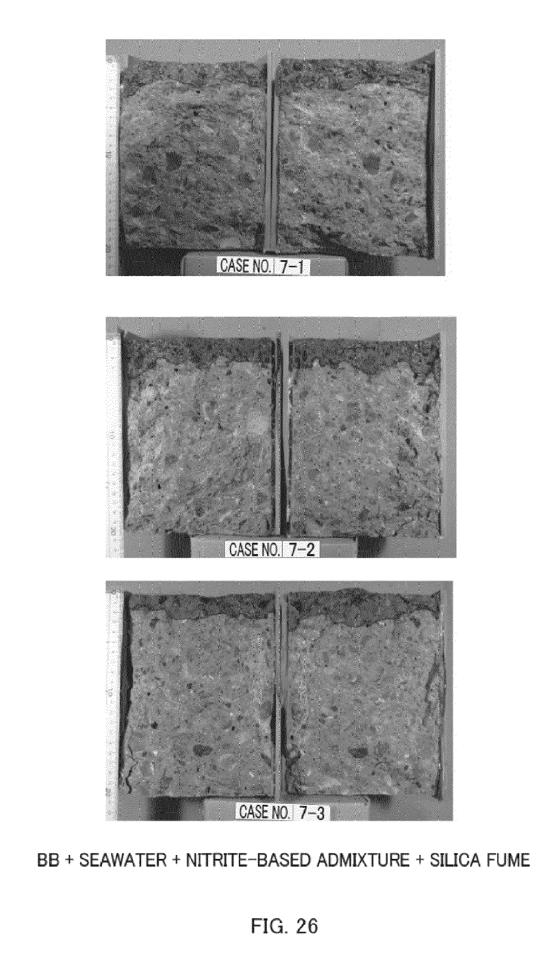

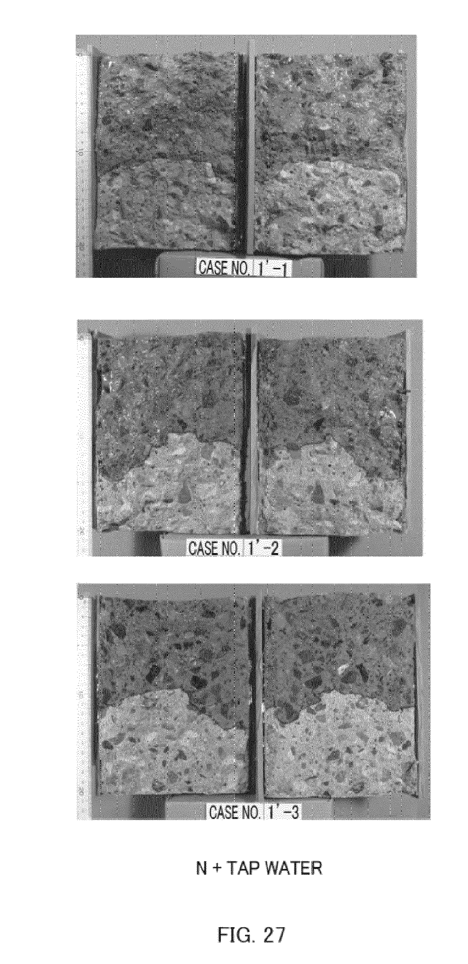

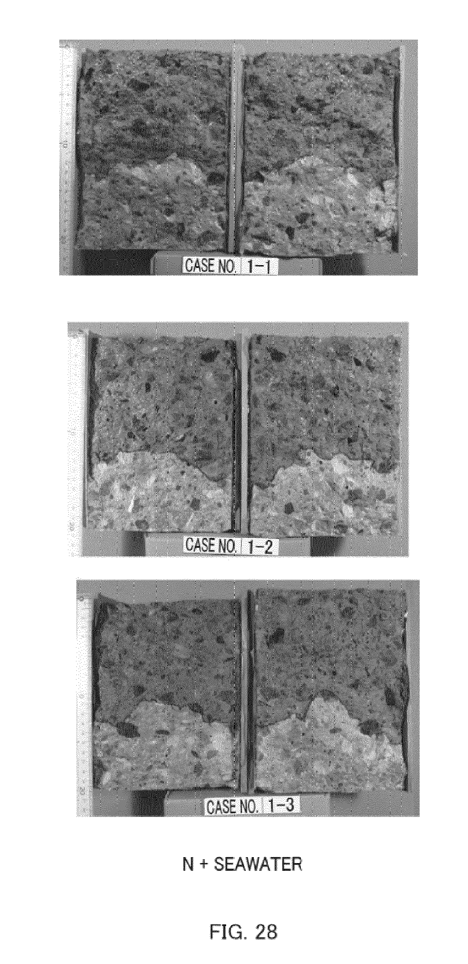

Fig. 23 is a photograph of the cross section of sample 2' (blast furnace cement, tap water) and Fig. 24 is a photograph of the cross section of sample 2 (blast furnace cement, real seawater). Note that, the top photograph in Fig. 24 shows the permeation direction of pressurized water and the permeation depth thereof. Fig. 25 is a photograph of the cross section of sample 3 (blast furnace cement, real seawater, nitrite-based admixture) and Fig. 26 is a photograph of the cross section of sample 7 (blast furnace cement, real seawater, nitrite-based admixture, silica fume). Fig. 27 is a photograph of the cross section of sample 1' (ordinary Portland cement, tap water) and Fig. 28 is a photograph of the cross section of sample 1 (ordinary Portland cement, real seawater).

As shown in Fig, 29A, the average diffusion coefficient was 8.16 x 10⁻² cm²/sec for sample 2' (blast furnace cement, tap water), 4.82 x 10⁻² cm²/sec for sample 2 (blast furnace cement, real seawater), and 2.11 x 10⁻² cm²/sec for sample 3 (blast furnace cement, real seawater, nitrite-based admixture). Additionally, the average diffusion coefficient was 1.60 x 10⁻³ cm²/sec for sample 7 (blast furnace cement, real seawater, nitrite-based admixture, silica fume), 3.51 x 10⁻² cm²/sec for sample 1' (ordinary Portland cement, tap water) and 3.96 x 10⁻² cm²/sec for sample 1 (ordinary Portland cement, real seawater).

The following points were confirmed from this permeability test. First, under assumption of using blast furnace cement, when seawater is used as mixing water, the diffusion coefficient (permeability) can be reduced compared to the case using tap water as mixing water, on condition that blast furnace cement is used. Second, even when seawater is used as mixing water, a particular difference in the diffusion coefficient (permeability) is not recognized compared to the case using tap water, when ordinary Portland cement is used. Third, on condition that blast furnace cement is used, mixing a nitrite-based admixture or silica fume is extremely effective in reducing the diffusion coefficient (permeability) even in the case seawater is used as mixing water. Note that, it is understood that the diffusion coefficient can be reduced also when fly ash is used in place of silica fume. In short, it is understood that a similar operational advantage can be obtained when pozzolan is mixed therein.

In general, it has been said that when blast furnace cement is mixed with tap water, the cement is densified at long term material age (91 days) owing to the blast furnace slag effect, and the diffusion coefficient can be reduced. It was confirmed with this permeability test that the diffusion coefficient can be reduced even at 28 days material age, if seawater is used as mixing water and sea sand as fine aggregate.

The following matters were appreciated based on the results of the above described compressive strength test, durability test and permeability test.

Seawater mixed concrete using seawater as mixing water and sea sand as fine aggregate, can be said to be effective for densifying when type B blast furnace cement is used as the cement component. In particular, up until 28 days material age, the compressive strength of seawater mixed concrete can be increased more than concrete made using tap water. From such fact, earlier removal of forms from concrete is possible. And since blast furnace cement restrains the alkali-aggregate reaction, restraining of the expansion of concrete is possible even when a large amount of sodium ions originating from sodium chloride included in seawater and sea sand exist.

From above, concrete structures provided with necessary durability can be constructed even when seawater and sea sand is used. And since seawater and sea sand can be easily procured even at sites of remote islands or coastal areas where tap water is difficult to secure, it is particularly useful when constructing concrete structures at such areas. For example, energy can be conserved and the costs for transporting material and securing tap water can be reduced.

Necessary tensile force can be secured when reinforcement is used. Three kinds of reinforcement, namely carbon fiber (carbon fiber formed into grids in the present embodiment), epoxy coated steel bars that are ordinary steel bars with epoxy resin coated on their surface, and rust proof coated steel bars that are ordinary steel bars with anti-rust coated on their surfaces (Armor #1000), were compared to confirm that when used in concrete structures, their life periods are different. And structures constructed with seawater mixed concrete using carbon fiber as reinforcement, were estimated to withstand long term use of approximately 100 years life period. Further, structures constructed with seawater mixed concrete using epoxy coated steel bars as reinforcement, were estimated to withstand medium term use of approximately 70 years life period. Furthermore, structures constructed with seawater mixed concrete using rust proof coated steel bars as reinforcement, were estimated to withstand short term use of approximately 30 years life period.

Therefore, concrete structures with a life period appropriate for their use can be designed by adopting a design method that employs reinforcement formed with carbon fiber when their life periods are long terms, epoxy coated steel bars as reinforcement when their life periods are medium terms, and rust proof coated steel bars as reinforcement when their life periods are short terms.

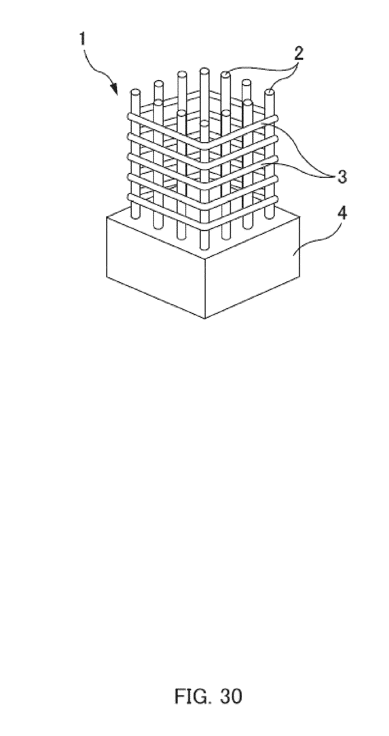

Note that, various concrete structures with reinforcement arranged are possible. For example, they may be columns, walls, or foundations. Fig. 30 exemplifies a column structure 1 as a concrete structure. This column structure 1 is structured with column main reinforcements 2, hoops 3, and seawater mixed concrete 4. And the column main reinforcements 2 and the hoops 3 correspond to the aforementioned reinforcement.

Further, it was determined that defects such as corrosion due to chloride ions can be restrained as well as the diffusion coefficient of concrete after hardening reduced when seawater mixed concrete includes nitrite-based admixtures such as Rusnein. From such facts, external intrusion of harmful factors such as intrusion into concrete of the salinity originating from seawater and sea sand, or carbonic acid gas can be restrained.

Further, it was determined that the diffusion factor of concrete after hardening can be reduced in the case pozzolan such as silica fume is included in seawater mixed concrete. Therefore, similar to the case including a nitrite-based admixture, external intrusion of harmful factors such as intrusion of seawater and sea breeze borne salinity, or carbonic acid gas into concrete can be restrained.

By the way, the above-described embodiment is intended to facilitate the understanding of the present invention and not to limit the invention. It is needless to say that modifications and improvements are possible without departing from the gist and scope of the invention, and equivalents thereof are also encompassed by the invention.

For example, regarding nitrite-based admixtures, the type including nitrite esters of polyhydric alcohol as its main component has been exemplified, however, other kinds of nitrous admixtures have the same operational advantages, as long as nitrite ions can be supplied. For example, those including calcium nitrite as its main component or lithium nitrite as its main component may be used.

Further, regarding blast furnace cement, those besides type B blast furnace cement may be used. The point is, other kinds of cement have the same operational advantages as long as blast furnace slag is included as the cement component.

## Claims

1. A method of forming a reinforced concrete comprising:
admixing seawater, a cement material comprising ordinary Portland cement and 30% to 60% blast furnace slag, an aggregate comprising sea sand, and
at least one reinforcement to increase tensile strength selected from the group consisting of: carbon fiber, an epoxy-coated steel bar, and a rust-proof-coated steel bar,
wherein a total chloride ion content of the admixture is greater than 0.3 kg/m³ and
the admixture hardens to form the reinforced concrete having a life period of greater than about 30 years.

2. The method of Claim 1, wherein the admixing further comprises introducing a nitrite-based admixture to the seawater, cement material, aggregate, and at least one reinforcement.

3. The method of Claim 2, wherein the reinforced concrete has an average diffusion coefficient for chloride ions of less than about 2.11 x 10⁻² cm²/sec.

4. The method of Claim 2, wherein the nitrite-based admixture comprises nitrite esters of polyhydric alcohol.

5. The method of Claim 2, wherein the admixing further comprises introducing a pozzolan to the nitrite-based admixture, seawater, cement mixture, aggregate, and at least one reinforcement.

6. The method of Claim 5, wherein the reinforced concrete has an average diffusion coefficient for chloride ions of less than about 1.60 x 10⁻³ cm²/sec.

7. The method of Claim 5, wherein the pozzolan comprises silica fume.

8. The method of any one of Claims 1 to 7, wherein the total chloride ion content of the admixture is less than or equal to about 4.7 kg/m³.

9. The method of any one of Claims 1 to 8, wherein the total chloride ion content of the admixture is substantially 4.7 kg/m³.

10. A method of improving early strength in a concrete, the method comprising:
introducing a nitrite-based admixture to an admixture of seawater, a cement material comprising ordinary Portland cement and 30% to 60% blast furnace slag, and an aggregate comprising sea sand,
wherein a total chloride ion content of the admixture is greater than or equal to 0.3 kg/m³;
and wherein the nitrite-based admixture serves to increase an early compressive strength as the admixture hardens to form concrete.

11. The method of Claim 10, wherein the introducing further comprises introducing a pozzolan with the nitrite-based admixture.

12. The method of Claim 11, wherein the pozzolan comprises silica fume.

13. The method of any one of Claims 10 to 12,
wherein the introducing further comprises introducing at least one reinforcement to increase tensile strength selected from the group consisting of: carbon fiber, an epoxy-coated steel bar, and a rust-proof-coated steel bar,
wherein the concrete formed is a reinforced concrete having a life period of greater than about 30 years.

14. The method of any one of Claims 10 to 13,
further comprising placing the admixture into a form and removing the form after hardening of the admixture, wherein the form can be removed earlier than for a comparative admixture comprising the seawater, the cement material, and the aggregate comprising sea sand, but lacking the nitrite-based admixture.

15. The method of any one of Claims 10 to 14, wherein the total chloride ion content of the admixture is less than or equal to about 4.7 kg/m³.

16. The method of any one of Claims 10 to 14, wherein the total chloride ion content of the admixture is substantially 4.7 kg/m³.
